# EUROPÄISCHE PATENTSCHRIFT

(11) **EP 3 772 886 B1**
(45) Veröffentlichungstag und Bekanntmachung des Hinweises auf die Patenterteilung: **19.11.2025**
(21) Anmeldenummer: 19721544.5
(22) Anmeldetag: 11.04.2019
(51) Int. Cl.: A01D 17/10, B65G 15/52

(54) **SIEBBANDEINHEIT FÜR EINE ERNTEMASCHINE, ZUGEHÖRIGE KLAPPENEINHEIT**
SCREENING BELT UNIT FOR A HARVESTING MACHINE AND CORRESPONDING FLAP UNIT
UNITÉ TABLIER-CRIBLEUR D'UNE RÉCOLTEUSE, UNITÉ CLAPET ASSOCIÉE

(30) Priorität: 13.04.2018 DE 102018108879
(43) Veröffentlichungstag der Anmeldung: 17.02.2021
(73) Patentinhaber: Grimme Landmaschinenfabrik GmbH & Co. KG, 49401 Damme (DE)
(72) Erfinder: ROSS, Julian, 59889 Eslohe (DE); HALBRÜGGE, Christoph, 49134 Wallenhorst (DE); GERDES, Josef, 49624 Löningen (DE); KRUTHAUP, Franz-Bernd, 49401 Damme (DE); HÖNEMANN, Heinrich, 49076 Osnabrück (DE)
(74) Vertreter: Wischmeyer, André
(86) Internationale Anmeldenummer: PCT/EP2019/059308
(87) Internationale Veröffentlichungsnummer: WO 2019/197554

(56) Entgegenhaltungen:
- DE-A1- 3 109 209
- DE-A1- 3 429 004
- DE-U1- 20 011 436
- FR-A1- 2 216 901

## Beschreibung

Die vorliegende Erfindung betrifft eine Siebbandeinheit für eine Erntemaschine, insbesondere für einen Hackfruchternter zum Absieben von Beimengen eines Gemisches umfassend Erntegut und Beimengen insbesondere in Form von Boden, Kluten und Steinen, wobei die Siebbandeinheit ein Siebband umfasst, welches wenigstens zwei vorzugsweise als Trägerriemen oder -ketten ausgebildete Endlosträger aufweist, zwischen denen in Richtung quer zur Förderrichtung Siebstäbe angeordnet sind, die eine Mehrzahl von insbesondere jeweils zumindest zwei Siebstäbe umfassende Siebstabeinheiten ausbilden, wobei zumindest ein Teil der Siebstäbe relativ zu den Endlosträgern beweglich festgelegt ist.

Beim Ernten von Hackfrüchten, insbesondere von Kartoffeln durch ein gattungsgemäßes Siebband sollen einerseits ungewünschte Beimengen in Form von Erde entweder zum Schutz des Ernteguts gezielt mitgeführt und darüber hinaus jedoch ebenso gezielt aus dem Erntegut-Beimengen-Gemisch entfernt werden. Gleichzeitig soll verhindert werden, dass je nach Größe des zu siebenden bzw. zu transportierenden Ernteguts zu kleine Fraktionen von Erntegut durch das Siebband hindurchfallen oder beim Transport gequetscht werden.

In der DE 27 15 108 wurde hierzu vorgeschlagen, die Siebbandteilung dergestalt zu variieren, dass nachträglich an den vorhandenen Siebbändern anzubringende Zusatzquerstäbe zu montieren sind, die zu einer Variation der Siebbandteilung führen. Die Zusatzquerstäbe sind einzeln zu montieren, was mit einem entsprechenden Aufwand einhergeht.

Des Weiteren sind aus dem Stand der Technik Fallklappen bekannt, die als Zusatzbauteile mit in einem Siebband integriert sind. Die Fallklappen sind in der Siebzone im Obertrum geschlossen und öffnen sich schwerkraftbedingt im Untertrum. Hierdurch entstehen im Untertrum größere Ausnehmungen, die die Selbstreinigung des Siebbandes aufgrund von aus dem Obertrum nach unten fallenden Beimengen verbessern. Die Fallklappe ist im Lasttrum geschlossen und öffnet sich schwerkraftbedingt erst im Leertrum. Für eine Änderung der Siebbandteilung, d.h. des effektiven Abstands der Siebstäbe des Siebbandes, muss dieses demontiert und ausgetauscht werden. Der hiermit einhergehende Zeitaufwand während eines Erntebetriebs bei häufig vergleichsweise engen Zeitfenstern ist nachteilig.

Aus der DE 32 34 C ist es bekannt, Siebstäbe unterschiedlich schräg zum Siebband anzustellen.

Des Weiteren ist aus der EP 133 886 A1 eine Regelvorrichtung für eine Erntebergungsvorrichtung bekannt, die bei einer Lageveränderung der Bandaufsammeleinrichtung eine Korrektur der Lage der Bandaufsammeleinrichtung einleiten kann, um diese wieder in ihre ursprünglich eingestellte Lage zurückzuverstellen, so dass eine optimale Erntebergung möglich ist.

In der DE 200 11 436 U1 ist eine Siebbandeinheit offenbart, in der die Stabkörper der Siebstäbe in auf den biegsamen Bändern fest angeordneten Hülsen befindlich sind.

Es ist Aufgabe der vorliegenden Erfindung, den für eine Änderung der Siebbandteilung notwendigen Aufwand zu minimieren.

Die Aufgabe wird gelöst durch einen Gegenstand gemäß Anspruch 1 sowie durch einen Gegenstand gemäß Anspruch 21. Vorteilhafte Ausgestaltungen der Erfindung sind den auf diese Ansprüche rückbezogenen Unteransprüchen sowie der nachfolgenden Beschreibung zu entnehmen.

Erfindungsgemäß ist vorgesehen, dass die Siebbandeinheit ein wenigstens abschnittsweise längs des Siebbandes angeordnetes und auf die beweglichen Siebstäbe einwirkendes Positioniermittel aufweist, über das in der Siebzone in Siebrichtung betrachtet ein Abstand in Förderrichtung nachfolgender Siebstäbe definiert und insbesondere variabel einstellbar ist. Das Positioniermittel wirkt entweder direkt oder indirekt auf die beweglichen Sieb- oder Querstäbe. Es führt zu einer Relativlage der beweglichen Siebstäbe zu den Endlosträgern dergestalt, dass in Siebrichtung betrachtet die Abstände der Siebstäbe durch eine geänderte Position des Positioniermittels variiert werden. Die Abstände der Siebstäbe können hierbei durch eine Verkürzung des Abstandes aufeinanderfolgender Siebstäbe in Richtung vertikal wie auch in Förderrichtung variiert werden. Wesentlich ist, dass eine durch das Positioniermittel induzierte Bewegung der relativ zum Endlosträger beweglich angeordneten Siebstäbe deren Abstand zu benachbarten, feststehenden Siebstäben variiert wird. Dies kann erfolgen durch ein Verschwenken oder Verdrehen der beweglichen Siebstäbe, die insbesondere drehbar oder über einen biegsamen Gelenkteil an dem Endlosträger oder einem fest mit dem Endlosträger verbundenen Siebstäben angebunden sind.

Erfindungsgemäß ist die Siebstabeinheit mit wenigstens einer Klappeneinheit versehen, die zumindest einen der zwei Siebstäbe aufweist, wobei die Klappeneinheit über wenigstens ein mit dem Endlosträger mittelbar oder unmittelbar verbundenes Gelenk schwenk- oder drehbar ist und das Positioniermittel zur Beeinflussung einer Winkellage der Klappeneinheit ausgebildet ist. Die Klappeneinheit weist somit den zu verschwenkenden Siebstab auf. Die Winkellage ergibt sich über einen Winkel zwischen der Förderrichtung und einer von der Dreh- oder Schwenkachse in radialer Richtung ausgehenden Längserstreckung der Klappeneinheit. Beispielsweise ist diese Längserstreckung bei einer Siebstabeinheit mit einem am Endlosträger befestigten Siebstab und einem schwenkbeweglich oder drehbeweglich hierzu angeordneten Siebstab definiert durch eine durch beide Längsmittelachsen der Siebstäbe hindurchlaufende und senkrecht zu denselben Siebstäben verlaufende, gradlinige Strecke, die gegenüber der Förderrichtung F angewinkelt ist.

Durch die Anordnung des nicht als Teil des Siebbands geltenden Positioniermittels und dessen Einwirkung auf die beweglichen Siebstäbe kann der Abstand der einander nachfolgenden Siebstäbe auch im Verlauf ein und derselben Sortierzone variiert werden. Beispielsweise kann hierfür das Positionierelement in Siebrichtung betrachtet die beweglichen Siebstäbe in einem über den Verlauf der Sortierzone variierenden, insbesondere zu- und/oder abnehmenden Abstand halten bzw. führen. Im Verlauf einer Siebzone wird so mit zunehmender Förderstrecke die Trennung der Beimengen vom Erntegut gezielt vorgenommen. Die Änderung des Abstandes in Förderrichtung nachfolgender Siebstäbe geht vorzugsweise gleichzeitig einher mit einer Änderung des Abstandes senkrecht zur Förderrichtung, was zu einer vorteilhaften Ausbildung von Taschen des Siebbandes führt.

Durch die erfindungsgemäße Ausbildung einer Siebbandeinheit mit Siebstabeinheiten, die vorzugsweise jeweils einen oder mehrere beweglich festgelegte Siebstäbe aufweisen, kann auf den Austausch der Siebbänder zum Zweck der Änderung der Siebbandteilung verzichtet werden. Ebenfalls entfällt das aus dem Stand der Technik bekannte Anbringen zusätzlicher Sieb- bzw. Querstäbe. Die Sieb- oder Querstäbe der erfindungsgemäßen Vorrichtung umfassen sowohl Stäbe, die senkrecht zwischen den zwei Endlosträgern verlaufen wie auch solche, die geringfügig schräg angewinkelt sein können sowie insbesondere auch abgekröpfte Siebstäbe.

Darüber hinaus versteht es sich, dass die Endlosträger auf herkömmliche Weise zu Wartungs- und Reparatur- oder auch Austauschzwecken aufgrund des Verschleißes derselben über bekannte Verbindungsmittel geöffnet werden können. Hierfür können die Endlosträger Schlösser oder andere den Endlosträger öffnende Verbindungsbereiche aufweisen.

Durch die Möglichkeit einer in einer Seitenansicht bzw. in einem Längsschnitt zumindest teilweise gestuften Anordnung der Siebstäbe bzw. Ihrer Längsmittelachsen lassen sich mit den zu fördernden Hackfrüchten größere Steigungen überwinden. Durch die Ausbildung lokaler Förderflächen, die einer geringere Neigung gegenüber einer Horizontalen haben als die Endlosträger, kann mit den Hackfrüchten eine größere Höhe pro Förderstrecke überwunden werden, ohne dass sie entgegen der Förderrichtung die Siebbandeinheit hinunterrollen. Das wiederum führt zu einem geringeren Bauraumbedarf der Siebbandeinheit und der Möglichkeit der Verkürzung derer bzw. dessen Siebbands.

Vorteilhafterweise ist zumindest ein Teil der Siebstabeinheit durch das Positioniermittel lageveränderbar zum Endlosträger ausgebildet. Die Siebstabeinheit weist hierbei insbesondere den relativ zu den Endlosträgern beweglich festgelegten Siebstab auf. Entsprechend ist ein Teil der Siebstabeinheit dann lageveränderbar zum Endlosträger ausgebildet. Vorzugsweise handelt es sich bei dem lageveränderbar zum Endlosträger positionierbaren Teil der Siebstabeinheit um einen noch nachbeschriebenen Klappenteil, der um zumindest einen relativ zum Endlosträger oder an diesem ortsfest angeordneten Teil der Siebstabeinheit verschwenkt oder verdreht werden kann. Insbesondere ist der verschwenk- oder verdrehbare Teil der Siebstabeinheit und somit der bewegliche Teil derselben dem nicht verschwenkbaren Teil der Siebstabeinheit in Fahrtrichtung nachgeordnet an dem Positionierelement gelagert, was für eine Zugbewegung vorteilhaft ist, da weniger Blockaden der schwenkbaren Teile im Kontakt mit dem Positioniermittel auftreten können. Für einen gleichwohl optional möglichen und insbesondere kurzfristigen Reversierbetrieb des Siebbandes zwecks Auflösung etwaiger Blockaden kann der verschwenk- oder verdrehbare Teil dann auch vorlaufend gelagert sein.

Gemäß einer weiteren Ausführungsform der Erfindung kann die Siebstabeinheit einen im Querschnitt exzentrisch gelagerten Siebstab aufweisen. Hierbei kann es sich um einen ovalen Stab oder um einen runden, jedoch mit einer exzentrisch innerhalb seiner Außenoberfläche gelagerten Drehachse versehenen Stab handeln. Bei der Verwendung dieser runden Stäbe wird zur Variation des Abstandes einander nachfolgender Stäbe nicht jeder sondern beispielsweise nur jeder zweite Stab verstellt. Bevorzugt handelt es sich jedoch um einen um eine Schwenkachse dreh- oder schwenkbarer gelagerten Siebstab, der über ein Gelenk sowie etwaig zugehörige Abstandsmittel von einer Dreh- oder Schwenkachse beabstandet ist. Es können somit bereits bekannte Siebstäbe erfindungsgemäß verwendet werden.

Das Gelenk kann insbesondere mit einem biegsamen, beispielsweise auf Basis von Kunststoff wie Polyurethan aufgebauten, Gelenkteil versehen sein. Über einen solchen Gelenkteil und bei dessen ausreichender Steifigkeit kann der beweglich und gelenkig angebundene Siebstab vom Positioniermittel unbeeinflusst in einer vordefinierten Lage, z.B. mit minimalem oder einem vorgegebenen Abstand relativ zum Endlosträger positioniert sein. Insbesondere kann der bewegliche Siebstab über zwei endseitige Filmscharniere direkt oder indirekt, beispielsweise über einen fest an dem Endlosträger verbundenen Siebstab, an den Endlosträgern angebunden sein.

Durch das Positioniermittel und die gelenkige Anbindung kann der relativ zum Endlosträger bewegbare Siebstab zur Variation der Siebstababstände verwendet werden. Das Positioniermittel kann relativ beweglich zum Rahmen der Siebstabeinheit, einem Maschinenrahmen oder auch fest an diesen angeordnet sein. Die Bewegung des entsprechenden Siebstabs ergibt sich vorzugsweise aus der Bewegung des Endlosträgers relativ zum Positioniermittel. Insbesondere sind zu beiden Seiten einer mit zwei oder mehr Endlosträgern versehenen Siebbandeinheit Positioniermittel angeordnet, die im Betrieb gleichzeitig auf die relativ zum Endlosträger beweglichen Siebstäbe einwirken.

Erfindungsgemäße Klappeneinheiten können in Förderrichtung des Siebbandes nacheinander bzw. hintereinander angeordnet sein, so dass das Positioniermittel, welches wenigstens abschnittsweise längs des Siebbandes und insbesondere in der Siebzone angeordnet ist, gleichzeitig eine Mehrzahl von Klappeneinheiten hinsichtlich deren Winkellager beeinflusst. Durch unterschiedliche Winkellagen aufgrund unterschiedlicher Positionen des Positioniermittels ergibt sich in der Siebrichtung betrachtet ein jeweils unterschiedlicher Abstand einerseits zwischen den fest beabstandeten Siebstäben einer Siebstabeinheit und andererseits zwischen den Siebstäben einer ersten vorgeordneten und einer nachgeordneten Siebstabeinheit ergeben.

Die Siebrichtung ist hierbei die Richtung der Schwerkraft, die auf die Beimengen dergestalt wirkt, dass diese zwischen den von den Siebstäben ausgebildeten Zwischenräumen unter der Voraussetzung der passenden Abmessung hindurchfallen können.

Das Positioniermittel ist gemäß einer erfindungsgemäßen Weiterbildung dergestalt ausgebildet, dass es die insbesondere schwerkraftbedingte Verschwenkung oder Drehung der Klappeneinheiten begrenzt. Es liegt somit unterhalb der beweglichen Teile einer Siebstabeinheit bzw. der Klappeneinheit und bildet für diese ein Auflager bzw. einer Auflagerfläche aus. So kann durch ein Aufliegen der beweglichen Teile einer Siebstabeinheit eine Winkellage definiert werden, die mit einer bestimmten Siebbandteilung einhergeht. Bei einer ausreichend großen Beabstandung des Positioniermittels von der Siebstabeinheit dergestalt, dass diese nicht mehr in Kontakt mit dem Positioniermittel steht, ist die Siebstabeinheit schwerkraftbedingt dann ausgerichtet. In dieser Position wäre der Abstand in Förderrichtung nachfolgender, d.h. nacheinander folgender, Siebstäbe die Teilung zumindest in Fall einer horizontal zum Untergrund verlaufenden Siebzone (und unter Nichtberücksichtigung etwaiger Asymmetrien in der Gewichtsverteilung einer Klappeneinheit) maximal. Im Falle einer maximal dicht entlang des Endlosträgers verlaufenden Anordnung des Positioniermittels kann die Siebeinheit nur geringfügig oder gar nicht verschwenken und weist eine horizontale oder nahezu horizontal und parallel zur Förderrichtung F verlaufende Ausrichtung auf. Die Siebstababstände sind dann minimiert.

Vorteilhafterweise weist das Positioniermittel in der Siebzone wenigstens eine Führungsfläche zur Anlage der Klappeneinheiten auf. Eine solche Führungsfläche, die entsprechend der Anordnung des Positioniermittels entlang des Siebbandes verläuft, bietet eine konstruktiv vergleichsweise einfache Möglichkeit, eine Vielzahl von Siebstabeinheiten gleichzeitig zu beeinflussen. Durch Annäherung und Entfernung einer solchen Führungsfläche und damit des Positioniermittels von dem Siebband wird den schwenk- oder drehbaren Klappeneinheiten ein Bewegungsspielraum vorgegeben, der zur Bestimmung des Anstellwinkels der Klappeneinheiten und damit der Siebbandteilung führt. Vorteilhafterweise ist die Führungsfläche senkrecht zur Förderrichtung betrachtet neben und insbesondere zumindest teilweise zwischen den Endlosträgern angeordnet. Es können dann herkömmliche Siebbänder ohne Änderung der Bauraumbreite für das Siebband verwendet werden, wobei lediglich innenseitig in den oftmals vorhandenen Lufträumen des Siebbandrahmen das Positioniermittel entlang der Siebzone angeordnet und maschinenrahmenseitig oder siebbandrahmenseitig vorzugsweise variabel positionierbar festgelegt wird oder ist. Auf diese Weise lassen sich somit bereits existierende Erntemaschinen mit der erfindungsgemäßen Siebbandeinheit nachrüsten.

Vorzugsweise kann die Führungsfläche zur Erzeugung eines punktuell variierenden Abstands, d. h. einer punktuell variierenden Siebbandteilung mit einer Profilierung versehen sein, die zur Unterstützung von Reinigungszwecken abschnittsweise oder auf der gesamten Führungsfläche des Positionierelements vorhanden sein kann. Durch eine Profilierung kann im Betrieb der Abstand der Siebstäbe bzw. die Winkellage der Klappeneinheiten beeinflusst werden, was wiederum zu einem kurzfristigen, impulsartigen Anheben oder einem Absenken des transportierten Gemisches führt. Durch eine solcherart induzierte Rüttelbewegung kann auf einfache Weise eine Reinigungswirkung unterstützt werden.

Bevorzugt ist zumindest ein Abschnitt der Führungsfläche derart ausgebildet, dass ihr Abstand zur Förderfläche in Förderrichtung F insbesondere kontinuierlich zu- oder abnimmt. Die Förderfläche ist dabei ausgebildet durch die Längsmittelachsen von relativ zu den Endlosträgern unbeweglich angeordneten Siebstäben. Dadurch lässt sich die Siebbandeinheit durch einfachste Mittel wie eine Gleitschiene als Positioniermittel über die Förderstrecke an das sich durch Aussiebungen ändernde Mischungsverhältnis von Hackfrüchten und Beimengungen entlang der Förderstrecke anpassen. Besonders bevorzugt lässt sich der Abstand in Abhängigkeit von einem Steigungswinkel der Förderfläche variieren. Dadurch lässt sich erreichen, dass in steileren Abschnitten des Fördertrums der Siebbandeinheit größere Stufen bzw. Taschen zwischen aufeinanderfolgenden, unbeweglichen Siebstäben bzw. aufeinanderfolgenden, beweglichen Siebstäben dadurch ausgebildet werden, dass die beweglichen Siebstäbe zumindest von jeweils einem benachbarten, unbeweglichen Siebstab weiter entfernt werden. Dadurch kann in steileren Abschnitten ein Hinunterrollen der Hackfrüchte entgegen der Förderrichtung wirksam vermieden werden. Durch die automatische Variation des Abstandes der Führungsfläche in Abhängigkeit von einem Steigungswinkel lassen sich die Stufen bzw. Taschen zu flacher verlaufenden Abschnitten der Siebbandeinheit hin zurückbilden und sich so eine für die Absiebung optimale Siebstabkonfiguration herstellen.

Es versteht sich, dass die Siebstäbe insbesondere -jedoch nicht nur- zum Schutz des Ernteguts mit einem Kunststoffüberzug versehen sein können, der dämpfende Eigenschaften aufweist. Auch können mehrere Siebstäbe einer Klappen- oder Siebstabeinheit mit ein- und demselben Umhüllung versehen sein, so dass die Abstände der Siebstäbe einer Siebstabeinheit auf null reduziert werden.

Allgemein wird als Siebstab ein zwischen den Endlosträgern aufgespannter Stab beliebigen Querschnitts verstanden. Der Querschnitt kann rund, unrund und insbesondere auch flacher ausgebildet sein.

Zur variablen Einstellung bzw. zur Realisierung einer Einstellbarkeit auch während des laufenden Betriebs oder während kurzer Umrüstphasen kann dem Positioniermittel gemäß einer weiteren erfindungsgemäßen Ausgestaltung zumindest ein Stellorgan zugeordnet sein, über das der Abstand zumindest eines die Klappeneinheit führenden Teils des Positioniermittels zum Endlosträger einstellbar ist. Insbesondere wird hiermit zumindest der Abstand der Führungsfläche zum Endlosträger variiert. Durch diesen Abstand ergibt sich dann die Winkellage der mit dem Endlosträger verbundenen Klappeneinheit. Als Stellorgane kommen bevorzugt Gewindestangen für eine insbesondere manuelle oder über Schrittmotoren gesteuerte Verstellung infrage. Alternativ oder ergänzend können hydraulisch oder pneumatisch oder allgemein elektromotorisch betriebene Stellorgane verwendet werden. Diese sind insbesondere über eine zur Maschinensteuerung zugehörige und insbesondere in diese integrierte Auswerte- bzw. Steuervorrichtung betätigbar.

Vorzugsweise ist in Förderrichtung betrachtet sowohl am linken wie auch am rechten Ende der jeweiligen Siebstabeinheiten ein Positioniermittel angeordnet, sodass eine gleichmäßige Führung der beweglichen Siebstäbe realisiert ist. Ungeachtet einer gegebenenfalls rahmenseitig vorhandenen teilweise einstückigen Verbindung des Positioniermittels mit einer Führung der jeweiligen Endlosträger ist ein eine Führung der Siebstabeinheiten bewirkender Teil des Positioniermittels beabstandet von dem Endlosträger angeordnet.

Das Positioniermittel kann entlang der Siebzone vorteilhafterweise mehrteilig ausgebildet sein, sodass eine möglichst hohe Variabilität in der Beabstandung insbesondere der Führungsfläche von dem Endlosträger vorhanden ist. Die Führungsfläche kann dann ebenfalls mehrteilig ausgebildet sein und Änderungen in der Steigung des Siebbandes nachvollziehen.

Beispielsweise kann weiterhin eine mit Klappeneinheiten versehene, erfindungsgemäße Siebbandeinheit in einem ansteigenden Bereich des Siebbandes durch Einstellung einer bestimmten Winkellage der Klappeneinheiten zur Ausbildung von Fördertaschen im Siebband verwendet werden, während bei eher horizontal verlaufenden Förderabschnitten der Schwerpunkt auf die Siebfunktion gelegt werden kann. Hierfür können im eine Siebfunktion im Vordergrund aufweisenden Siebbandbereich andere und insbesondere auch variierende Abstände der Führungsfläche zum Endlosträger und damit einhergehende unterschiedliche Winkellagen der Klappeneinheiten und Siebstababstände eingestellt sein. Eine erfindungsgemäße Siebbandeinheit kann somit verschiedene Schwerpunktfunktionen im Verlauf ihrer Siebzone im Obertrum aufweisen.

Insofern weist die erfindungsgemäße Siebbandeinheit bei einem mehrteiligen Positioniermittel dann auch insbesondere mehrere Stellmittel auf. Während die erfindungsgemäßen Siebstabeinheiten beispielsweise über Langlöcher bewirkte geringfügige Änderung der Abstände der Siebstäbe zueinander aufweisen können, ist es zur Vermeidung von nicht gewünschten Positionen und zur Definition genauer Abstände vorteilhaft, wenn die Siebstäbe einer Siebstabeinheit einen bis auf etwaige vorhandenes Lagerspiel festen Abstand zueinander aufweisen.

Vorzugsweise hat zumindest einer der beweglichen Siebstäbe der Siebbandeinheit in einer Mittelstellung unterschiedlich große Abstände zu den vor- bzw. nachgeordneten, unbeweglichen Siebstäben. Alternativ hat die Längsmittelachse des beweglichen Siebstabes unterschiedliche Abstände zu den Längsmittelachsen des vor- bzw. nachgeordneten, unbeweglichen Siebstabes. **In** dieser Ausgestaltungsform befinden sich in Förderrichtung zwischen dem beweglichen Siebstab und dem vor- bzw. nachgeordneten, unbeweglichen Siebstab insbesondere keine weiteren Siebstäbe. **In** der Mittelstellung ist die Längsmittelachse des beweglichen Siebstabes insbesondere bei geradem Bandverlauf zumindest im Wesentlichen in einer Ebene mit den Längsmittelachsen eben jener unbeweglichen Siebstäbe angeordnet, d.h. insbesondere, dass der bewegliche Siebstab sich genau zwischen den unbeweglichen Siebstäben befindet. Durch die unterschiedlichen Abstände zu den benachbarten Siebstäben in der Mittelstellung wird erreicht, dass der bewegliche Siebstab in einer weiteren Stellung gleiche Abstände zu den unbeweglichen Siebstäben hat. Diese Ausbildung der Siebbandeinheit ist insbesondere dann vorteilhaft, wenn die beweglichen Siebstäbe sich im Betrieb überwiegend außerhalb der Mittelstellung befinden. Somit haben die Siebstäbe im überwiegenden Teil des Betriebes einen etwa für eine Siebfunktion optimalen, einheitlichen Abstand zueinander. Außerdem lassen sich durch die Verstellbarkeit die weiteren vor- und nachbeschriebenen Vorteile der Erfindung erreichen, hier insbesondere nach hinreichender Absiebung der Spalt zwischen einzelnen Siebstäben schließen.

Gemäß einer weiteren vorteilhaften Ausbildung der Erfindung ist ein Siebstab einer jeweiligen Siebstabeinheit an den Endlosträgern festgelegt und bildet einen Teil von zwei Gelenken zur Anbindung der Klappeneinheit aus. Durch die Festlegung des Siebstabs kann über einfache Weise ein Schwenk- oder Drehgelenk ausgebildet werden, welches über die schwenk- bzw. drehbaren Gelenkteile einen parallel zu dem festgelegten Siebstab angeordneten beweglichen Siebstab ermöglicht. Sinnvollerweise weist die Siebstabeinheit zu beiden außenseitigen Endlosträgern hin ein Dreh- bzw. Schwenkgelenk auf. Der am Endlosträger festgelegte Siebstab bildet dann die Drehachse der Klappeneinheit aus. Alternativ können beispielsweise zwei schwenkbar die Klappeneinheit ausbildende Siebstäbe aneinander und über eine abgekröpfte und keinen Siebstab ausbildende Verbindung in einem Schwenklager oder Drehlager der jeweiligen Endlosträger gelagert sein.

Insbesondere ist das Positioniermittel zumindest teilweise streifenförmig ausgebildet, so dass die Führungsfläche beispielsweise Teil einer Führungsschiene sein kann, die als konstruktiv relativ einfaches Bauteil im Wege eines Einbaus einer erfindungsgemäßen Siebbandeinheit in eine Erntevorrichtung an einen Rahmen des Siebbandes oder einen Maschinenrahmen montiert und insbesondere nachträglich angebaut werden kann. Eine solche Führungsschiene kann beispielsweise Teil eines Winkelprofils sein.

Um einen Verschleiß zwischen dem verschwenkbaren Siebstabeinheitenteil und der Führungsfläche zu minimieren, kann das Positioniermittel auch zumindest teilweise mitlaufend ausgebildet sein. In einem solchen konstruktiv aufwändigeren Fall würde die Umlaufgeschwindigkeit des Positioniermittels, welches beispielsweise auch bandförmig ausgebildet sein kann, auf die Umlaufgeschwindigkeit des Siebbandes abgestellt sein. Das Positioniermittel würde dann ebenfalls wieder über entsprechende Positioniermittel variabel im Abstand zum Siebband ausgebildet sein.

Alternativ oder ergänzend bei ein oder mehreren mehrteiligen Positioniermitteln kann bzw. können diese eine Rolle umfassen, die ebenfalls insbesondere an einem Rahmen des Siebbandes bzw. der Siebbandeinheit oder einem Maschinenrahmen montiert ist. Eine solche Rolle ist insbesondere mit einer Drehachse versehen, die parallel zu der wesentlichen Längserstreckung der Siebstäbe ausgerichtet ist. Die Rolle kann so angeordnet sein, dass sie jeweils in den Endbereichen der beweglichen Siebstäbe auf diese einwirkt. Beispielsweise kann die Rolle bei einer Anbindung an einem Rahmen der Siebbandeinheit direkt innenseitig der Endlosträger positioniert werden und entweder direkt an den Siebstäben bzw. den beweglich und fest an dem Endlosträger angeordneten Siebstäbe verbindenden Teilen ablaufen. Ebenso ist es denkbar, beispielsweise in der Mitte zwischen zwei Endlosträgern eine Rolle als Positioniermittel anzuordnen. Eine solche Rolle oder ein solches Positioniermittel kann bei der Verwendung von fest an dem Endlosträger angeordneten Siebstäben dazu führen, dass das komplette Siebband beim Überfahren einer Rolle angehoben wird. Sofern alle Siebstäbe beweglich an dem Endlosträger, beispielsweise über Filmscharniere angeordnet sind, würde beispielsweise der Riemen nicht abheben, während durch die Rolle eine wellenartige Bewegung der Siebstäbe induziert wird. Entsprechend können durch eine Vielzahl von mehreren Rollen im Obertrum Rüttelbewegungen erzeugt werden, die mit einer Variation der Siebstababstände einhergeht.

Vorzugsweise ist die Rolle im Obertrum zum Hochdrücken zumindest der relativ zu den Endlosträgern beweglich festgelegten Siebstäbe ausgebildet. Hierbei können die relativ zu den Endlosträgern beweglich festgelegten Siebstäbe im Obertrum auf den Endlosträgern aufliegen und dann durch eine entsprechend hochstehende Rolle hochgedrückt werden. Falls somit kein Positioniermittel vorhanden ist, können bei einem solchen Ausführungsbeispiel die Siebstäbe entsprechend einen minimalen Abstand zu den feststehenden Siebstäben aufweisen. Eine solche Positionierung kann beispielsweise durch die Verwendung entsprechend steifer, gleichwohl elastischer Gelenkteile gesichert werden, so dass dann die entsprechend nur unter Krafteinwirkung verschwenkbaren Siebstäbe vergleichsweise fest positioniert sind. Die Steifigkeit der Gelenke wäre dann so auszulegen, dass im normalen Betrieb der Siebbandeinheit die im Betrieb auftretenden Vibrationen zu nur minimalen oder gar keinen Änderungen der Relativlage der beweglich an den Endlosträgern angeordneten Siebstäbe führen.

Die Verwendung von einer Reihe von Rollen entlang des Obertrums einer Siebbandeinheit ermöglicht die Nachrüstung von bestehenden Maschinen genauso wie die einfache Neuausstattung von neuen Einheiten.

Vorzugsweise sind wenigstens 25 % der Siebstäbe relativ zum Endlosträger lageveränderbar ausgebildet, so dass ein Siebband über große Teile seiner Gesamtlänge eine variierbare Siebteilung aufweist. Bevorzugter ist eine erfindungsgemäße Siebbandeinheit weiterhin mit einem Siebband versehen, welches zumindest zu 50 % mit lageveränderbar zum Endlosträger ausgebildeten Siebstäben versehen ist. So kann beispielsweise jeder zweite Siebstab feststehend ausgebildet sein, während an jedem feststehenden Siebstab eine Klappeneinheit mit einem in festem Abstand, jedoch schwenkbar um den feststehenden Siebstab herum bewegbaren Siebstab angeordnet ist. Erfindungsgemäße Ausbildungen der Siebbandeinheit können bevorzugt bis zu 3 von 4, d. h. 75 % der Siebstäbe lageveränderlich gestalten, sodass vorteilhafte Ausgestaltungen der Klappeneinheit mit zwei um einen feststehenden Siebstab verschwenkbaren Siebstäben oder mit drei verschwenkbaren Siebstäben verwendet werden können.

Die bevorzugten Ausführungsformen der Erfindung sind mit Klappeneinheiten versehen, die zumindest in einem gewissen Rahmen frei schwenk- oder drehbar um eine gegenüber den Endlosträgern ortsfeste Drehachse bzw. Befestigung bei der Verwendung biegsamer Gelenkteile und insbesondere die feststehenden Siebstäbe sind. Zur Vermeidung eines ungewünschten Umklappens der zwischen feststehenden Siebstäben frei durchschwenkbaren Klappeneinheiten im Bereich von Umlenkungen zu vermeiden, können gerade in diesen Bereichen ein oder mehrere Führungseinheiten vorgesehen werden, die zusätzlich zu dem Positioniermittel und insbesondere in einer Querrichtung betrachtet außerhalb des vom Endlosträger begrenzten Bereiches angeordnet sind. Vorzugsweise handelt es sich hierbei um bereits bekannte Krauteinzugsrollen, die im relevanten in Fahrtrichtung vorne liegenden Bereich etwaige fliehkraftbedingt verschwenkende Klappeneinheiten am ungewünschten Umklappen hindern.

Bevorzugt sind eine Führungsfläche des Positioniermittels und eine zur Anlage an diesem vorgesehene Außenoberfläche einer Klappeneinheit parallel ausgebildet, um eine gute Führung und eine Reinigungswirkung auf im Betrieb durch Beimengen verschmutzende Bereiche des Positioniermittels zu bewirken.

Die eingangs gestellte Aufgabe ist ebenfalls durch eine Siebbandeinheit mit einer Klappeneinheit gelöst, die einen Siebstab umfasst und wenigstens einen zur lösbaren Festlegung an einem weiteren Siebstab einer vor- oder nachbeschriebenen Siebbandeinheit ausgebildeten Gelenkteil aufweist, wobei das Gelenkteil oder der Siebstab der Klappeneinheit eine zur Anlage an einem Positioniermittel ausgebildete Außenoberfläche aufweist. Das Gelenkteil kann Teil eines Filmscharniers oder eines Drehgelenk. Während das Positioniermittel vorzugsweise eine mit einer Kunststoffbeschichtung versehene Außenoberfläche und Führungsfläche besitzt, kann die Klappeneinheit hierzu vorteilhafterweise eine in den verschiedenen Anlagepositionen parallel hierzu ausgebildete Oberfläche aufweisen, die einen möglichst gute Führung gewährleistet. Darüber hinaus sind die Breiten der Führungsfläche vorteilhafterweise auf die Breite der Anlageflächen der Klappeneinheit abgestimmt dergestalt, dass sie sich lediglich um wenige Zentimeter (< 10 Zentimeter) in der Breite unterscheiden. So kann sich auf den Führungsflächen eines Positioniermittels nur wenig Beimenge ablagern und die Führungsflächen werden durch die umlaufend anliegenden Außenoberflächen der Klappeneinheit im Obertrum im Betrieb gleichzeitig gereinigt werden.

Vorteilhafterweise ist das Gelenkteil zumindest zweiteilig und zur Aufnahme des weiteren Siebstabs der Siebbandeinheit ausgebildet, sodass der Austausch einzelner beschädigter oder verschlissener Klappeneinheiten ohne weiteres möglich ist. Insbesondere ist das Gelenkteil dann Teil eines Drehgelenks.

Die für eine Lagerung an einem Siebstab vorhandenen Gelenkteile sind vorzugsweise als Gelenkschalen ausgebildet und können entweder einstückig mit dem lageveränderlich positionierbaren Quer- bzw. Siebstab versehen sein oder entsprechende Aufnahmebereiche für herkömmliche Siebstäbe aufweisen.

Erfindungsgemäß hat die Klappeneinheit ein Absatzelement, das die zur Anlage an dem Positioniermittel ausgebildete Außenoberfläche aufweist. Definieren lässt sich das Absatzelement auf Basis einer Ebene, in der eine Längsmittelachse des beweglichen Siebstabes der Klappeneinheit und eine Längsmittelachse einer Aufnahme der Klappeneinheit angeordnet ist, die zur Festlegung an einem weiteren, relativ zu Endlosträgern unbeweglichen Siebstab ausgebildet ist. Die Längsmittelachse der Aufnahme fällt somit im montierten Zustand der Klappeneinheit mit der Längsmittelachse des weiteren, unbeweglichen Siebstabes zusammen. Das Absatzelement hat eine Erstreckung quer zu dieser Ebene, die mindestens 25 %, bevorzugt 50 %, besonders bevorzugt 100 % des Abstandes der Längsmittelachsen voneinander beträgt. Das Absatzelement ist insbesondere einteilig mit dem Gelenkteil bzw. einem Teil davon. Die Außenoberfläche ist insbesondere zumindest teilweise zwischen zwei zur vorbeschriebenen Ebene orthogonalen Orthogonalebenen angeordnet, die jeweils eine der vorbeschriebenen Längsmittelachsen beinhalten.

Durch das Absatzelement lassen sich die beweglichen Siebstäbe auf einfache Weise in eine Position anheben, in der sie zumindest anteilig oberhalb der unbeweglichen Siebstäbe bzw. der Förderfläche angeordnet sind. Durch das insbesondere von der Förderfläche nach unten ragende Absatzelement ist zu dieser Einstellung kein Positioniermittel nötig, das in den Raum zwischen zwei unbeweglichen Siebstäben eingreift. Vielmehr lassen sich durch die beweglichen Siebstäbe und das Absatzelement schon dann vorbeschriebene Taschen ausbilden, wenn das Positioniermittel, etwa eine Gleitschiene, noch deutlich von den unbeweglichen Siebstäben beabstandet ist und kein Beschädigungsrisiko besteht. Gleichzeitig erlauben die Absatzelemente eine Einstellung der beweglichen Siebstäbe unterhalb der durch die unbeweglichen Siebstäbe ausgebildeten Förderfläche. Somit erlauben die Absatzelemente eine weiterreichende Einstellbarkeit der Klappeneinheit bzw. der Siebbandeinheit unter Gewährleistung eines einfachen und zuverlässigen Aufbaus.

Bevorzugt hat der bewegliche Siebstab einen vom Gelenkteil abgekröpften Verlauf. Dabei hat der bewegliche Siebstab einen mittleren, geradlinig verlaufenden Mittelabschnitt, dessen Mittelabschnittslängsmittelachse vom Gelenkteil in einer Seitenansicht einen Abstand C hat. Der Abstand C ist insbesondere zumindest 10 %, bevorzugt zumindest 25 %, besonders bevorzugt zumindest 50 % des Abstandes D der Mittelabschnittslängsmittelachse von der Längsmittelachse der Aufnahme bzw. des unbeweglichen Siebstabes. In dieser Ausbildung ragt der bewegliche Siebstab insbesondere von dem zumindest einen Gelenkteil nach oben. Angewinkelt verlaufende, seitliche Abschnitte stellen eine Verbindung des Mittelabschnitts zum Gelenkteil her. Diese Ausbildung bietet alternativ oder zusätzlich zur vorbeschriebenen Variante mit dem Absatzelement die Möglichkeit, zumindest den mittleren Abschnitt des beweglichen Siebstabes oberhalb der Förderfläche zu positionieren, ohne dass das Positioniermittel in den Raum zwischen den umliegenden, unbeweglichen Siebstäben eingreifen muss. Insbesondere kann dazu das zumindest eine Gelenkteil auf dem Positioniermittel aufliegen. Die Außenoberfläche des Gelenkteils zur Anlage am Positioniermittel befindet sich insbesondere an einem von der Aufnahme bzw. dem unbeweglichen Siebstab aus über den Ansatzpunkt des beweglichen Siebstabes hinausragenden Teil des Gelenkteils. Dadurch lässt sich eine Übersetzung der Einstellung der schwenkbeweglichen Klappeneinheit durch das Positioniermittel erreichen und dadurch die Funktion der Siebbandeinheit optimieren.

Außerdem wird die eingangs gestellte Aufgabe auch durch eine Siebbandeinheit mit einem Siebband mit wenigstens zwei vorzugsweise als Trägerriemen oder - Ketten ausgebildeten Endlosträgern gelöst, zwischen den in Richtung quer zur Förderrichtung Siebstäbe angeordnet sind, wobei eine Mehrzahl der vor- oder nachbeschriebenen Klappeneinheiten vorhanden sind. Insbesondere ist ein solches Siebband, dem die vor- und nachbeschriebenen jeweiligen Vorteile ebenfalls zukommen, vollständig durch Siebstabeinheiten umfassend eine entsprechende Klappeneinheit ausgebildet.

Vorzugsweise ist das Siebband bzw. die Siebbandeinheit, insbesondere dessen/deren Gelenkteil derart ausgebildet, dass der bewegliche Siebstab aus der vorbeschriebenen Mittelstellung zumindest anteilig orthogonal zur Förderfläche aufwärts und/oder abwärts beweglich ist. Der bewegliche Siebstab bzw. dessen Längsmittelachse ist um zumindest 10 mm, bevorzugt um zumindest 20 mm, besonders bevorzugt um zumindest 30 mm von der Förderfläche wegbeweglich.

Erfindungsgemäß ist der bewegliche Siebstab bzw. die Klappeneinheit oder Siebstabeinheit um einen Winkel von zumindest 30°, bevorzugt von zumindest 60°, besonders bevorzugt von zumindest 90° relativ zur Förderfläche, zumindest hauptsächlich, aufwärts verschwenkbar. Das Positioniermittel ist zu einer derartigen Bewegung des beweglichen Siebstabes, bevorzugt aus der Mittelstellung, ausgebildet. Vorzugsweise ist der bewegliche Siebstab bzw. die Klappeneinheit um >360°, insbesondere um die Längsmittelachse des unbeweglichen Siebstabs, drehbar gelagert. Durch dieses Ausmaß an Beweglichkeit lassen sich die vorbeschriebenen Funktionen der Erfindung in besonders weitreichendem Umfang erreichen. Insbesondere lassen sich dadurch mit den Hackfrüchten besonders große Steigungen überwinden und die Siebleistung in einem besonders weiten Umfang einstellen.

In einer bevorzugten Ausgestaltung der Erfindung ist das Gelenkteil derart ausgebildet, dass eine Stützachse in der Mittelstellung relativ zur Förderrichtung verschwenkt ist. Insbesondere ist die Stützachse in der Mittelstellung relativ zur Förderrichtung um einen Winkel von zumindest 45°, bevorzugt um zumindest 70°, besonders bevorzugt um zumindest 80° verschwenkt angeordnet. Die Stützachse ist orthogonal zur Längsmittelachse des beweglichen Siebstabes angeordnet. Außerdem schneidet die Stützachse die Längsmittelachse des beweglichen Siebstabes und einen Mittelstellungskontaktbereich der Außenoberfläche des Gelenkteils. Mit dem Mittelstellungskontaktbereich liegt das Gelenkteil in der Mittelstellung auf dem Positioniermittel auf. Dabei ist die Stützachse eine gedachte, geometrische Achse. Durch diese Anordnung des Mittelstellungskontaktbereichs bzw. der Außenoberfläche relativ zur Längsmittelachse des beweglichen Siebstabes ist der Kontaktpunkt von Positioniermittel und Siebstab- oder Klappeneinheit besonders wenig vom beweglichen Siebstab beabstandet. Dadurch können Bewegungen des beweglichen Siebstabes unmittelbar eingeleitet werden und wird die Belastung insbesondere des Gelenkteils auf ein Mindestmaß, insbesondere eine Druckkraft, reduziert und eine kompakte Bauform der Klappeneinheit bzw. Siebstabeinheit erreicht.

Schließlich wird die Aufgabe ebenfalls noch gelöst durch eine Erntemaschine umfassend eine vor- oder nachbeschriebene Siebbandeinheit. Dieser Maschine kommen die vor- und nachbeschriebenen Vorteile der Siebbandeinheit zu. Es versteht sich, dass diese Erntemaschine die für einen Betrieb der erfindungsgemäßen Siebbandeinheit notwendigen Mittel wie z.B. Führungsrollen oder -scheiben, Antriebsmittel, Rahmen- oder andere tragende Teile besitzt. Insbesondere ist das Positioniermittel rahmenseitig festgelegt und kann über wenigstens ein entsprechend abgestütztes Stellorgan auf die beweglichen Siebstäbe einwirken.

Vorzugsweise hat die Erntemaschine einen Neigungssensor, der der Siebbandeinheit zugeordnet oder davon umfasst ist. Insbesondere hat die Erntemaschine außerdem eine Auswerte- bzw. Steuervorrichtung, die mit dem Neigungssensor verbunden ist. Der Neigungssensor und/oder die Auswerte- bzw. Steuervorrichtung ist dergestalt mit zumindest einem Stellorgan gekoppelt, dass mit wachsender Neigung der Erntemaschine eine automatische Verstellung des Positioniermittels einleitbar ist. Durch den Neigungssensor wird insbesondere eine Neigung der Erntemaschine bzw. der Siebbandeinheit um eine durch die Fahrzeugachse verlaufende Schwenkachse gemessen. Durch die automatische Verstellung kann die Ausbildung von vorbeschriebenen Stufen bzw. Taschen der Siebbandeinheit zur Vermeidung eines Zurückrollens von Hackfrüchten entgegen der Förderrichtung insofern angepasst werden, als dass bei einer eine lokale Steigung der Siebbandeinheit vergrößernden Neigung auf die Stufen bzw. Taschen und damit insbesondere eine Verschwenkung der Klappeneinheiten bzw. Siebstabeinheiten relativ zur Mittelstellung vergrößert werden. Bei einer entgegengesetzten Neigung lassen sich durch die automatische Verstellung die Stufen bzw. Taschen entsprechend zurückbilden und dadurch die Siebfunktion der Siebbandeinheit optimieren.

Die Bodenneigung kann ergänzend oder alternativ über ein oder mehrere andere Sensoren bestimmt werden, z.B. anhand eines GPS- o. dgl. Positionssensors in Verbindung einer lokal in der Auswerte- bzw. Steuervorrichtung oder extern auf einem Server hinterlegten Bodenkarte. Die Steuer- und Auswertevorrichtung umfasst übliche EDV-Mittel, die bei Erntemaschinen eingesetzt werden. Sie ist vorzugsweise in die Maschinensteuerung integriert.

Die Erntemaschine umfasst insbesondere ein Siebband mit einer entlang seines Fördertrums, insbesondere entlang der Förderfläche, variierenden Steigung. Insbesondere nimmt die Steigung in Förderrichtung kontinuierlich oder gestuft ab. Die Steigung des Fördertrums bzw. der Förderfläche variiert bevorzugt in einem Bereich zwischen 0° und 60°, besonders bevorzugt in einem Bereich zwischen 15° und 45°. Vorzugsweise hat die Förderfläche mehrere, insbesondere zumindest drei, bevorzugt vier, ebene Förderflächenabschnitte. Der in Förderrichtung hinterste und insbesondere tiefstgelegene Förderflächenabschnitt, auf den die Hackfrüchte im Betrieb aufgegeben werden, hat insbesondere eine Steigung von im Wesentlichen 42°. Der in Förderrichtung vorderste Förderflächenabschnitt hat insbesondere eine Steigung von im Wesentlichen 18°. Durch diesen Aufbau des Siebbandes bzw. der Erntemaschine lassen sich die vorbeschriebenen Vorteile der Siebbandeinheit bzw. des Siebbandes besonders umfangreich nutzen.

Weitere Vorteile und Einzelheiten der Erfindung sind der nachfolgenden Figurenbeschreibung zu entnehmen. In den Abbildungen zeigt:
- Fig. 1:: einen erfindungsgemäßen Gegenstand in einer perspektivischen Darstellung,
- Fig. 2:: eine teilweise Ansicht eines weiteren erfindungsgemäßen Gegenstands in einer Seitendarstellung,
- Fig. 3:: den Gegenstand nach Fig. 2 in einer weiteren Betriebsposition,
- Fig. 4:: den Gegenstand nach Fig. 2 in einer weiteren Betriebsposition,
- Fig. 5:: den Gegenstand nach Fig. 3 in einer ausschnittsweisen Darstellung,
- Fig. 6:: ein Detail einer erfindungsgemäßen Vorrichtung,
- Fig. 7:: ein weiteres Detail einer erfindungsgemäßen Vorrichtung,
- Fig. 8:: einen weiteren erfindungsgemäßen Gegenstand in einer gebrochenen leicht perspektivischen Darstellung,
- Fig. 9:: eine Detailansicht eines weiteren erfindungsgemäßen Gegenstands in einer Detailansicht,
- Fig. 10:: den Gegenstand nach Fig. 9 in einer weiteren Betriebsstellung,
- Fig. 11:: den Gegenstand nach Fig. 9 in einer weiteren Betriebsstellung,
- Fig. 12:: eine teilweise Ansicht eines weiteren erfindungsgemäßen Gegenstands in einer Seitendarstellung,
- Fig. 13:: eine Teilansicht eines Gegenstands nach Fig. 12,
- Fig. 14:: den Gegenstand nach Fig. 12 in einer teilweisen Draufsicht,
- Fig. 15:: einen weiteren erfindungsgemäßen Gegenstand,
- Fig. 16:: einen weiteren erfindungsgemäßen Gegenstand in einem Längsschnitt,
- Fig. 17:: den Gegenstand gemäß Fig. 16 in einer Detaildarstellung,
- Fig. 18:: den Gegenstand gemäß Fig. 16 in einer perspektivischen Ansicht,
- Fig. 19:: den Gegenstand gemäß Fig. 16 in einer weiteren Detaildarstellung,
- Fig. 20:: einen weiteren erfindungsgemäßen Gegenstand in einem Längsschnitt,
- Fig. 21:: den Gegenstand gemäß Fig. 20 in einer Detaildarstellung,
- Fig. 22:: den Gegenstand gemäß Fig. 20 in einer perspektivischen Ansicht,
- Fig. 23:: den Gegenstand gemäß Fig. 20 in einer weiteren Detaildarstellung.

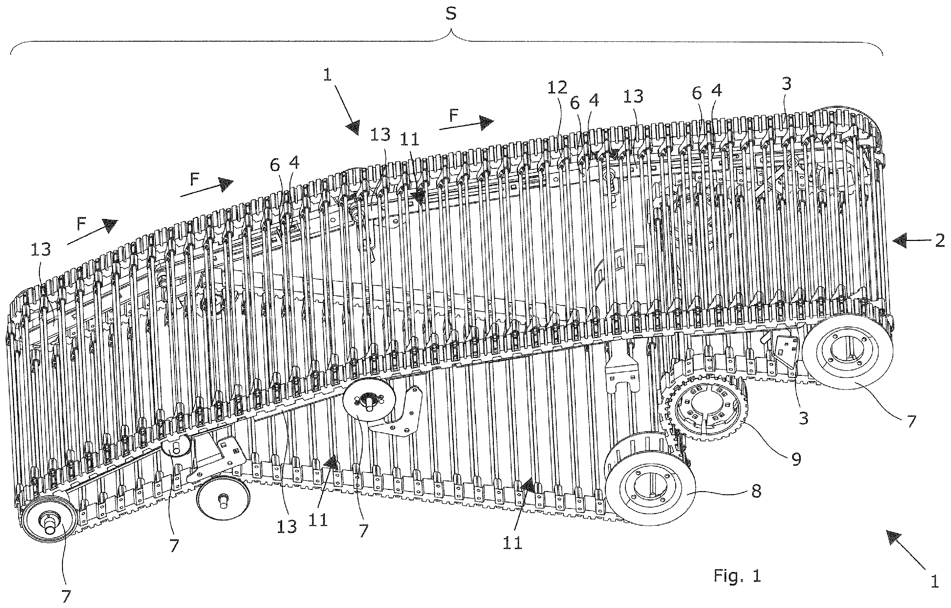

Eine erfindungsgemäße Siebbandeinheit 1 umfasst gemäß Fig. 1 ein Siebband 2, welches zum Absieben von Beimengen aus einem Gemisch von Erntegut und Beimengen vorgesehen ist. Das Siebband 2 weist zwei als Trägerriemen ausgebildete Endlosträger 3 auf, zwischen denen in Richtung quer zur Förderrichtung Siebstäbe 4 und 6 angeordnet sind. Die Förderrichtung F weist gegenüber einer nicht eingezeichneten Horizontalen über den Verlauf einer durch das Obertrum des Siebbandes 2 gebildeten Siebzone S unterschiedliche Steigungen auf. Diese Steigungen ergeben sich aufgrund der Positionierung von Umlenkrollen bzw. -scheiben 7, die teilweise als Antriebsscheiben ausgebildet sein können. Eine Spannrolle 8 spannt das Siebband 2 gegen eine Antriebsscheibe 9, sodass je nach eingestellter Steigung des Siebbandes in den einzelnen Siebbandzonen ein ausreichender Kontakt mit der Antriebsrolle 9 vorhanden ist.

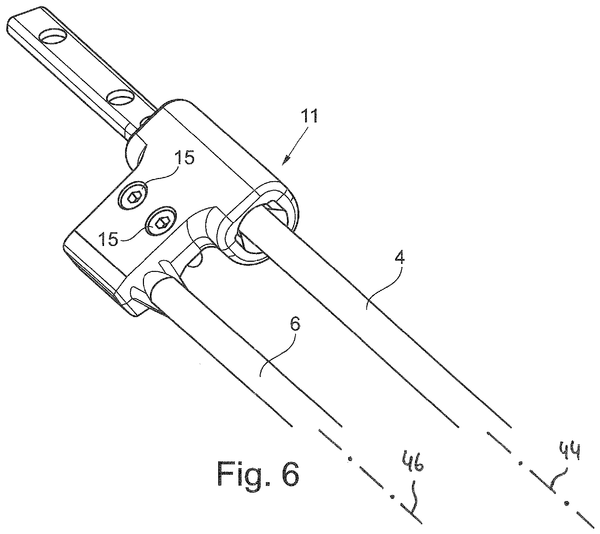

Einzelne, nachfolgend noch näher erläuterte Siebstäbe 4 und 6 bilden Siebstabeinheiten 11 (vgl. Fig. 6) aus, die einen am Siebband 2 festgelegten Siebstab 4 sowie einen gelenkig an diesen festgelegten Siebstab 6 inklusive eines zugehörigen Gelenkteils 12 aufweisen.

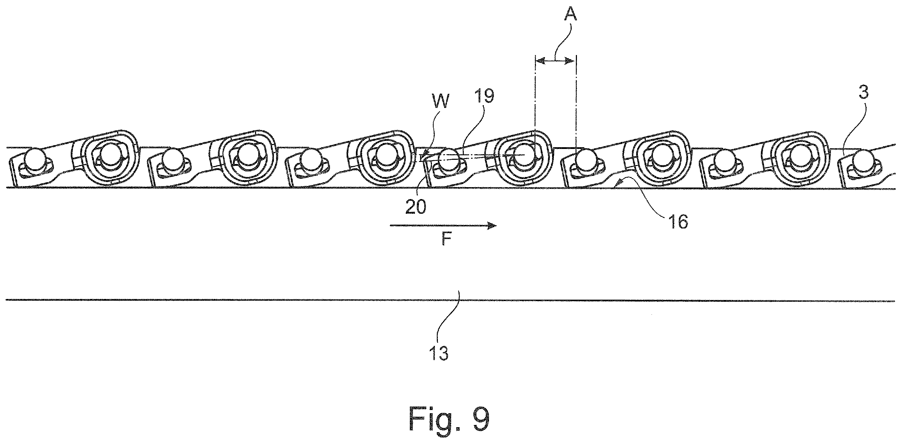

Die Siebstäbe 6 sind relativ zu den Endlosträgern 3 über die zwischen und durch die Siebstäbe 4 ausgebildeten Dreh- bzw. Schwenkgelenke relativ zu den Endlosträgern 3 beweglich festgelegt. Längs des Siebbandes 2 sind mehrere Positioniermittel 13 sowohl auf der in Förderrichtung linken als auch auf der in Förderrichtung rechten Seite angeordnet, die auf die beweglichen Siebstäbe 6 dergestalt einwirken, dass in der Siebzone ein in Siebrichtung R betrachteter Abstand A (vgl. Fig. 9 bis 11) definiert und durch Stellorgane variabel einstellbar ist. Insbesondere kann der Abstand A als Abstand einander in Förderrichtung nachfolgender Siebstäbe über die Siebzonenlänge in Förderrichtung F variieren.

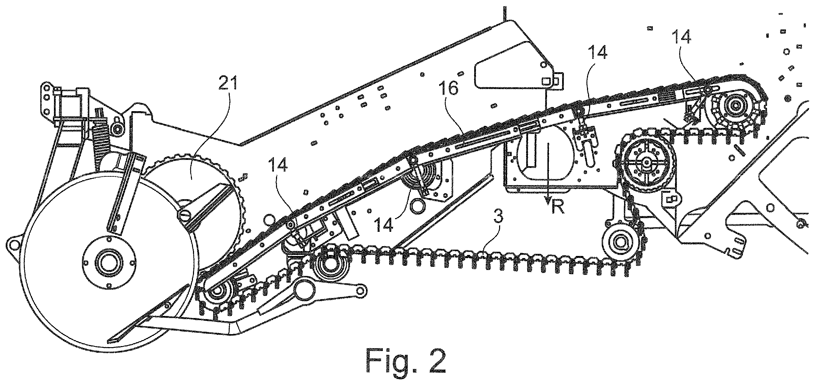

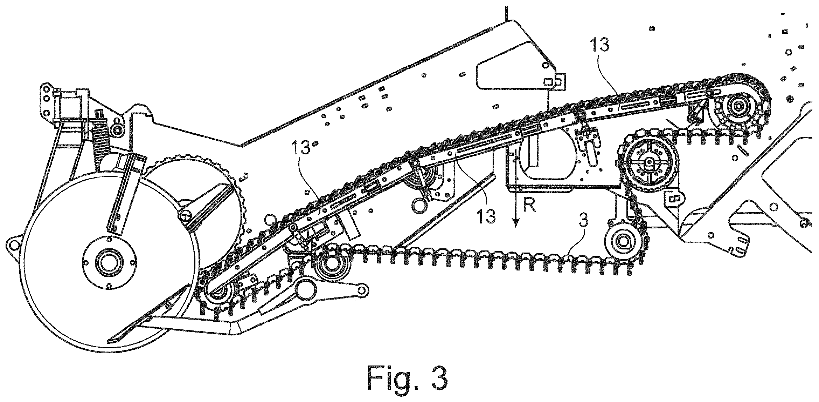

Das Positioniermittel 13 ist als Führungsschiene und mehrteilig ausgebildet, sodass sich analog zu den einzelnen Steigungsabschnitten des Siebbandes 2 Einzelabschnitte von Führungsschienen 13 ergeben. Mit einer Mehrzahl von zugeordneten Stellorganen 14 (Fig. 2) sind die einzelnen Abschnitte bzw. Teile des Positionierelements 13 in die gewünschte Relativposition zum Endlosträger 3 bringbar. Um bei unterschiedlichen Steigungen des Siebbandes im Verlauf der Siebzone S die notwendigen Anpassungen vornehmen zu können, ist das mehrteilige Positionierelement 13 mit einer Reihe von mittels Langlöchern beweglichen Schubverbindungen versehen. Die einzelnen Teile des Positionierelements sind so ineinander geführt und können hierdurch aufeinander zu- bzw. voneinander wegbewegt werden, um die Gesamtlänge des Positionierelements 13 in dem Obertrum bzw. der entsprechenden Sortierzone S veränderbar gestalten zu können. In den Figuren 2 bis 4 sind weiterhin übliche Teile einer erfindungsgemäßen Erntemaschine zu erkennen.

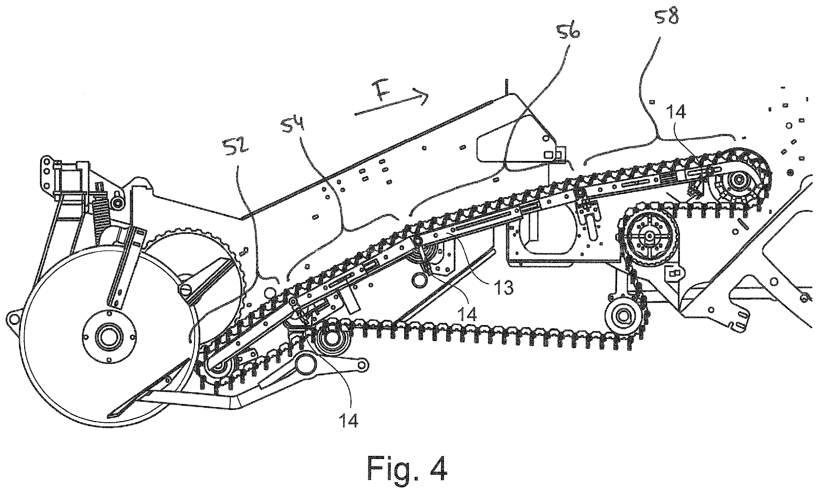

Das Siebband 2 bildet mit dem oberseitigen Fördertrum eine Förderfläche 40 aus, die vier in Förderrichtung aneinander anschließende Förderflächenabschnitte 52,54,56,58 hat (vgl. Fig. 4). Der in Förderrichtung erste Förderflächenabschnitt 52 hat relativ zu einer Horizontalen insbesondere eine Steigung von 42°, der in Förderrichtung letzte Förderflächenabschnitt 58 hat relativ zu der Horizontalen insbesondere eine Steigung von 18°.

In den Figuren 2, 3 und 4 sowie 9, 10 und 11 sind die unterschiedlichen Siebbandteilungen und Abstände A aufgrund unterschiedlicher Relativpositionen des Positionierelements 13 bzw. von Teilen des Positionierelements 13 in Bezug auf den Endlosträger 3 dargestellt. Durch die Beabstandung der in einer Draufsicht zumindest teilweise zwischen den Endlosträgern 3 angeordneten Positionierelemente 13 vom Endlosträger 3 können die einzelnen Klappeneinheiten der Siebstabeinheiten eine andere Winkellage relativ zur Längserstreckung des Endlosträgers 3 bzw. zur jeweiligen Förderrichtung einnehmen. Hierdurch ändert sich der Abstand A einander nachfolgender Siebstäbe 4, 6 unterschiedlicher Siebstabeinheiten.

Die links und rechts innenseitig der Endlosträger 3 längs des Siebbandes 2 angeordneten Positioniermittel 13 begrenzen die schwerkraftbedingte Verschwenkung bzw. Drehung der beweglichen Teile der Siebstabeinheiten 11 bzw. der Klappeneinheiten solange, bis die Öffnung wie vorbeschrieben bei horizontalen Verläufen des

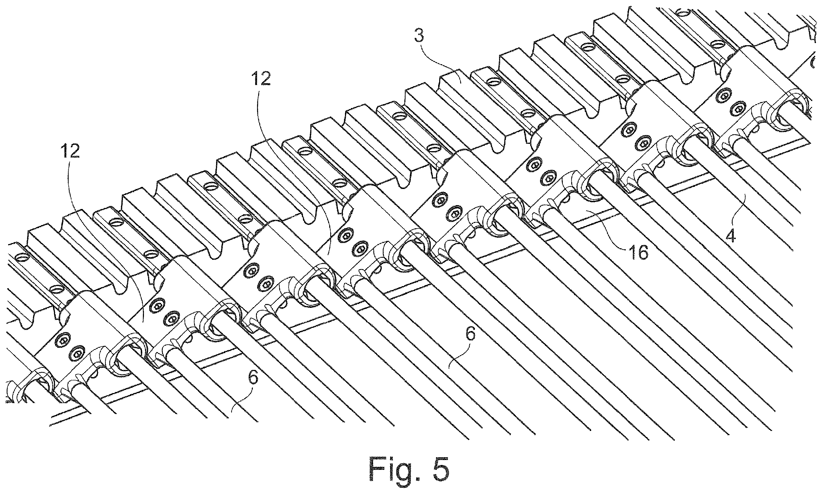

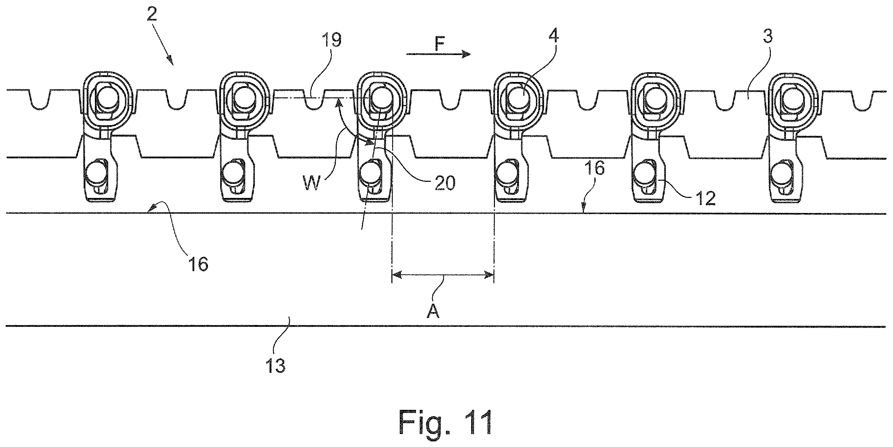

Siebbandes 2 aufgrund mangelnder Anlage auf dem Auflager maximal wird (Fig. 11). Zur Begrenzung der schwerkraftbedingten Verschwenkung oder Drehung der Klappeneinheiten ist das Positioniermittel 13 in der Siebzone mit einer Führungsfläche 16 versehen, auf der in der Darstellung der Fig. 5 die nicht näher erkennbaren Unterseiten der Gelenkteile 12 der Klappeneinheiten, umfassend Siebstäbe 6 und das Gelenkteil 12 aufliegen. Die Oberfläche 16 ist zur Verringerung der Reibung mit den Unterseiten der Klappeneinheiten mit einem Kunststoffüberzug versehen. Während des Betriebs der erfindungsgemäßen Siebbandeinheit wird durch das Überziehen bzw. Gleiten der Klappeneinheiten entlang der Führungsfläche diese von dem Obertrum herunterfallenden Beimengen gesäubert.

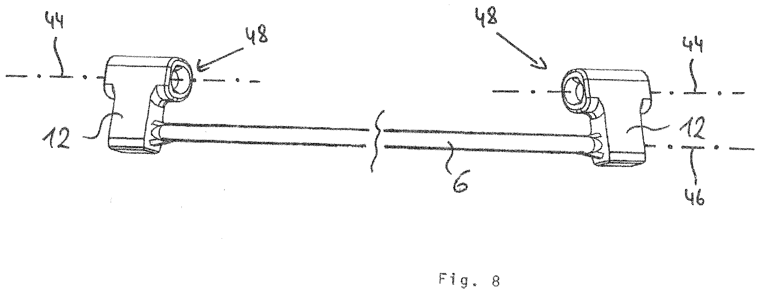

Die erfindungsgemäßen Klappeneinheiten können gemäß Fig. 8 an beiden Enden Gelenkteile 12 aufweisen, die durch den gebrochen dargestellten Siebstab 6 verbunden sind. Der Siebstab 6 erstreckt sich längs seiner Längsmittelachse 46. Das Gelenkteil 12 hat eine Aufnahme 48 für einen weiteren Siebstab 4, der unbeweglich zu Endlosträgern 3 eines Siebbandes angeordnet ist. Die Aufnahme hat eine Längsmittelachse 44, die sich parallel zur Längsmittelachse 46 erstreckt und in montiertem Zustand der Klappeneinheit der Längsmittelachse 44 des weiteren Siebstabes 4 einer aus der Klappeneinheit und ebenjenem Siebstab 4 gebildeten Siebstabeinheit 11 entspricht. Die Längsmittelachse 44 fällt dabei insbesondere mit der Schwenkachse der Siebstabeinheit 11 zusammen.

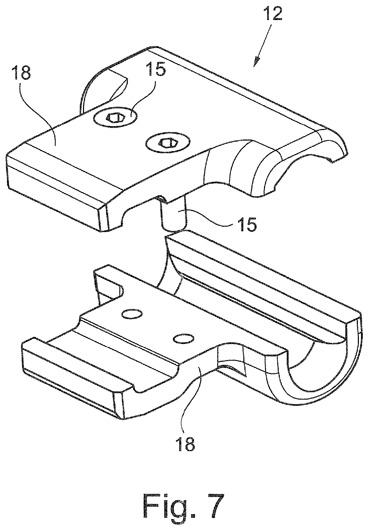

Die Siebstäbe 4 einer jeweiligen Siebstabeinheit 11 sind an dem Endlosträger festgelegt, sodass über das zwischen Siebstab 4 und Siebstab 6 ausgebildete Gelenk der Siebstab 6 lageveränderlich zum Endlosträger 3 festgelegt ist (vgl. Fig. 5 und 6). Zu Wartungswecken ist ein Gelenkteil 12 vorzugsweise mit zwei Schalenhälften 18 ausgebildet (Fig. 7), die über Befestigungsmittel 15 miteinander verbunden sind. Entsprechend schnell kann eine fehlerhafte oder schadhafte bzw. verschlissene Klappeneinheit ersetzt werden.

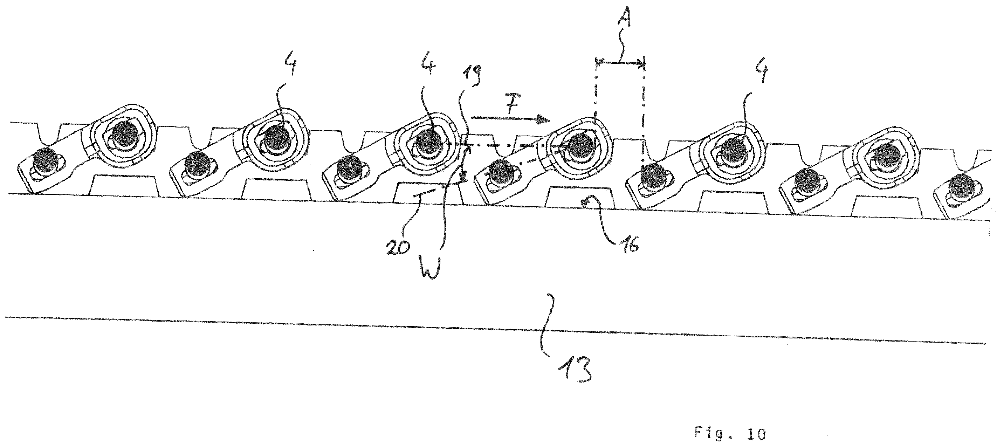

Die Winkellage der Klappeneinheit bzw. der Siebstabeinheit ist wie in den Fig. 9, 10 und 11 gezeigt in der Siebzone S durch den Abstand des Positioniermittels 13 und insbesondere dessen Führungsfläche 16 von dem Siebbandträger 3 beschränkt. In der vergleichsweise dichten Position nach Fig. 9 ist ein Winkel W zwischen einer parallel zur Förderrichtung F und mithin zum Endlosträger 3 ausgebildeten Geraden 19 und einer durch die Längserstreckung einer Klappeneinheit gebildeten Geraden 20 nahezu 0 (Fig. 9). Bei einem Winkel W von 0 befindet sich der bewegliche Siebstab in einer Mittelstellung. Durch die Beabstandung des Positioniermittels 13 von dem Endlosträger bzw. der Drehachse der feststehenden Siebstäbe 4 können die Klappeneinheiten schwerkraftbedingt und gegebenenfalls belastet durch zu siebendes Gemisch zu einem größeren Winkel W aufklappen und liegen weiterhin auf der Führungsfläche 16 an (Fig. 10). Die stärkere Beabstandung des Positioniermittels 13 von der Drehachse des jeweiligen feststehenden Siebstabs einer jeweiligen Klappeneinheit führt bei der in der Fig. 11 dargestellten horizontalen Ausrichtung des Siebbandes 2 dazu, dass die Gelenkteile 12 nicht mehr auf der Führungsfläche 16 aufliegen und die Klappenteile maximal aufgeschwenkt sind. Der hierfür eingenommene Winkel W liegt je nach Symmetrie der Klappeneinheit nahezu bei 90°, zumindest jedoch bevorzugt zwischen 80° und 100°. Insbesondere hängt der Abstand des Positioniermittels 13 von einer lokalen Steigung 41 der Förderfläche 40 (in der die Gerade 19 liegt) ab. Um im Bereich der Umlenkung der Endlosträger 3 bzw. des Siebbandes 2 ein schwerkraftbedingtes Überschlagen der Klappeneinheiten zu vermeiden, kann eine herkömmlicherweise als Krauteinzugsrolle ausgebildete Führungseinheit 21 verwendete Rolle, die vorzugsweise breiter als der Endlosträger ausgebildet ist, in dem Umlenkbereich vorhanden sein (Fig. 2). Der Winkel W kann insbesondere Winkel von mindestens 60° sowohl mit positivem als auch mit negativem Vorzeichen annehmen. Außerdem kann der bewegliche Siebstab 6 bzw. dessen Längsmittelachse 46 insbesondere um zumindest 10 mm, bevorzugt um zumindest 20 mm, besonders bevorzugt um zumindest 30 mm aufwärts und abwärts von der Förderfläche 40 entfernt werden.

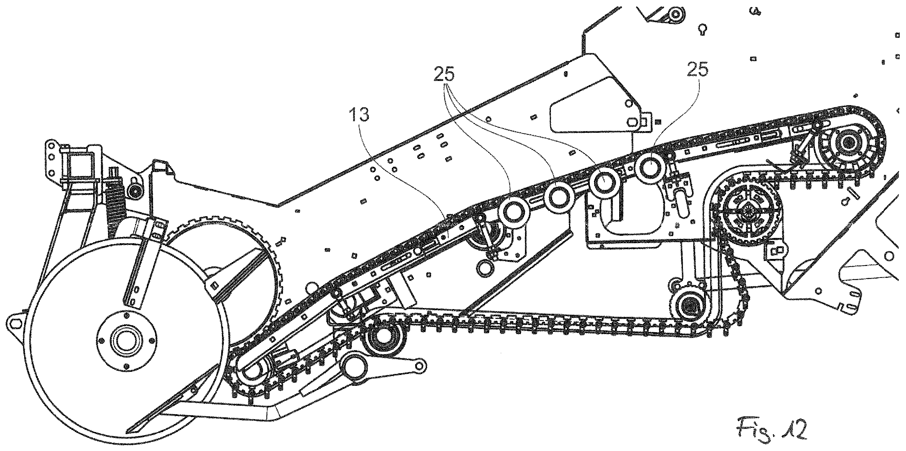

In Fig. 12 ist eine weitere erfindungsgemäße Variante einer Siebbandeinheit gezeigt, bei der etwaige Führungsschienen 13 zwar vorhanden, jedoch fest positioniert sind. Ergänzend sind Rollen 25 vorhanden, deren Drehachse parallel zu den Siebstäben verläuft. Die Rollen weisen einen Außendurchmesser auf, der so bemessen ist, dass im vorliegenden Beispiel maximal zwei nebeneinanderliegende Siebstabeinheiten erfasst werden. Aufgrund der Positionierung und Anordnung der Rolle am Rahmen der Siebbandeinheit bzw. am Maschinenrahmen ist die Außenoberfläche, die als Führungs- und Anlagefläche für die Siebstäbe dient bezogen auf eine Richtung vertikal zur Förderrichtung oberhalb der umgebenden Führungen für den Endlosträger. Hierdurch werden die in Kontakt mit der Außenoberfläche gelangenden Siebstabeinheiten zum Teil auch mit dem daran befestigten Endlosträger angehoben. Hierdurch entsteht eine Rüttelbewegung, die zu einer größeren Absiebleistung führt. Die Rollen lassen sich bezüglich ihres Durchmessers und der Festlegung einer Seite austauschen, so dass auch nur einzelne Siebstabeinheiten oder auch nur die beweglichen Siebstäbe einer Siebstabeinheit angehoben werden.

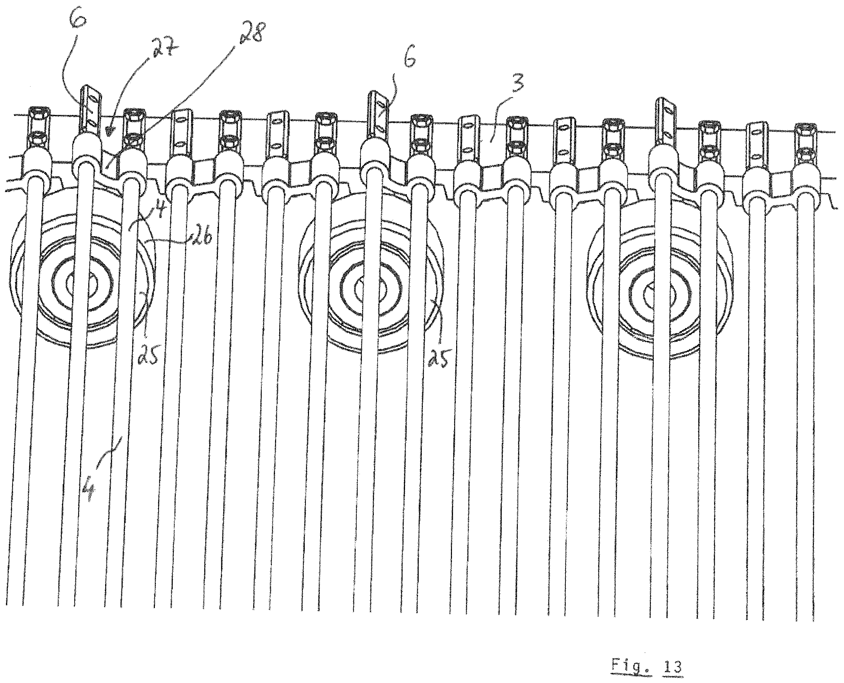

Gemäß Fig. 13 sind die Rollen 25 soweit in Richtung der Drehachse bzw. der Längsrichtung der Siebstellung positioniert, dass eine Außenoberfläche 26 der Rollen, die eine Führungsfläche darstellt, in Anlage mit den Siebstäben gelangt und somit diese seitlich neben der Verbindung 27 zwischen einem fest mit einem Endlosträger 3 verbundenen Siebstab 4 und einem beweglichen Siebstab 6. Der Siebstab 6 ist breiter ausgeführt als die Siebstäbe nach dem Ausführungsbeispiel gemäß Fig. 1. Ohne den Einfluss des Positioniermittels liegen die Stäbe 6 einerseits schwerkraftbedingt, andererseits allerdings auch aufgrund der Steifigkeit des aus Polyurethan hergestellten Gelenkteils 28 auf dem Endlosträger 3 auf. Erst durch das Positioniermittel wird der Siebstab 6 gegen das Gelenkteil 28 ausgelenkt.

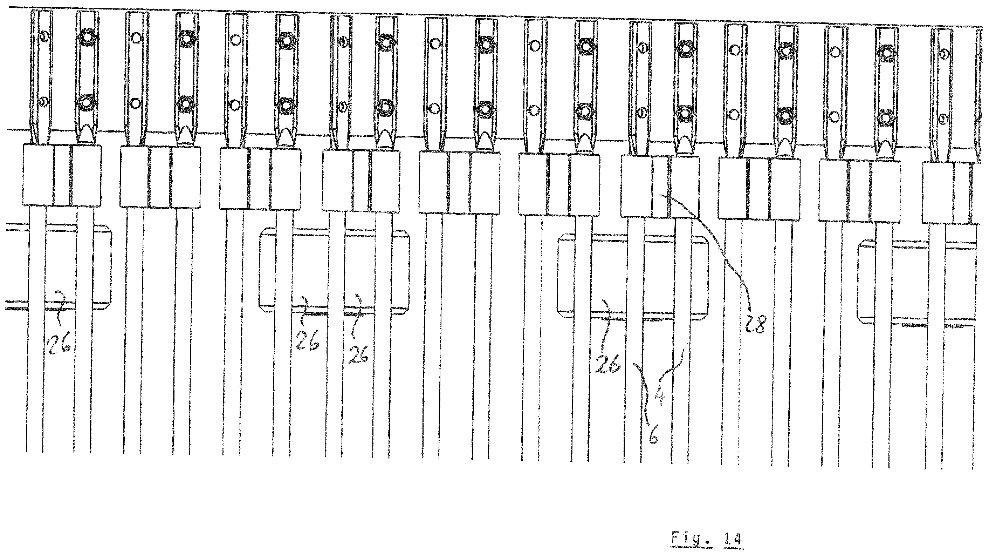

In Förderrichtung betrachtet sind beide Enden der Siebstäbe 6 auf den Endlosträgern aufliegend. Ebenfalls sind bevorzugt die Rollen aufweisenden Positioniermittel zumindest mit den Anlageflächen innenseitig der Gelenke angeordnet (vgl. Fig. 14). Die Rollen lassen sich insbesondere über nicht dargestellte Stellmittel in Richtung vertikal zur Figurenebene der Fig. 14 verstellen, so dass die Änderung der Siebbandabstände, die mit der Relativbewegung der Siebstäbe 6 einhergehen, variiert werden können.

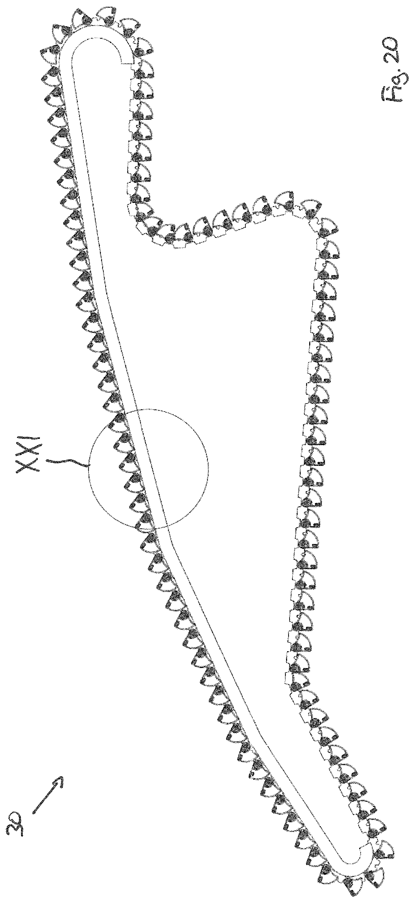

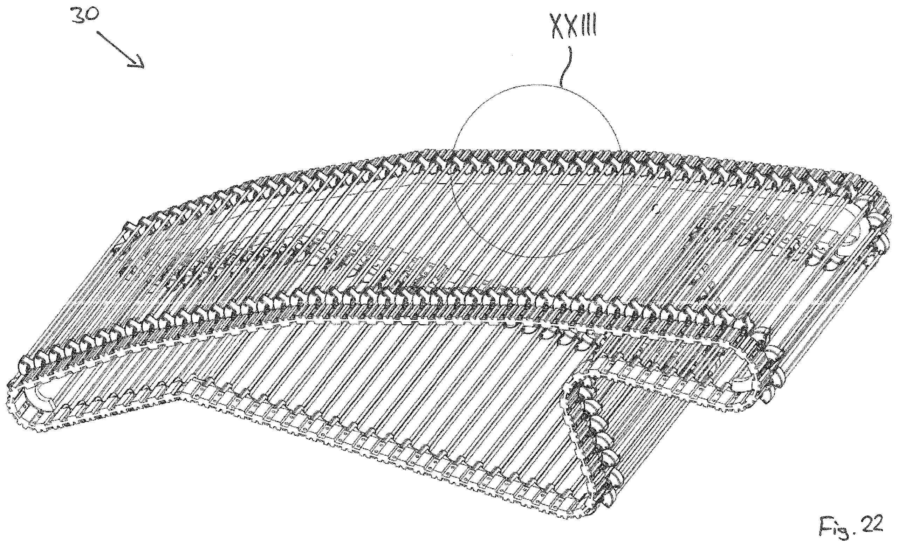

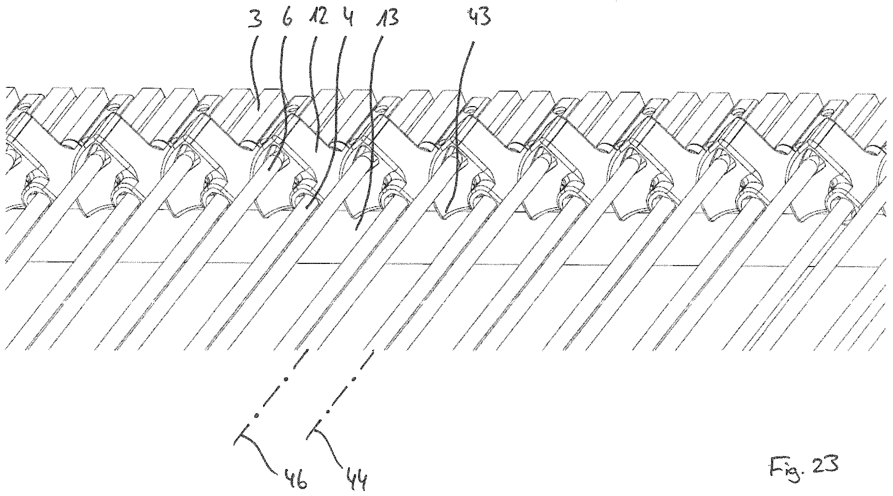

Die Siebstabeinheit 11 bzw. die Klappeneinheit hat in der durch die Fig. 20 bis 23 dargestellten Ausführungsform der Erfindung ein Absatzelement 43, das die zur Anlage an dem Positioniermittel 13 ausgebildete Außenoberfläche aufweist. Das Absatzelement hat eine Erstreckung E quer zur Ebene 42, die in einer Seitenansicht bzw. einem Längsschnitt mit der Geraden 20 (vergl. u.a. Fig. 9) zusammenfällt (und nur in der Mittelstellung mit der Förderfläche 40 zusammenfällt). In der Ebene 42 ist eine Längsmittelachse 46 des beweglichen Siebstabes 6 und eine Längsmittelachse 44 angeordnet. Die Längsmittelachse 44 ist beim Klappenelement die Längsmittelachse einer Aufnahme 48 (vergl. auch Fig. 9). Bei der Siebstabeinheit 11 ist die Längsmittelachse 44 die Längsmittelachse des unbeweglichen Siebstabes 4. Die Erstreckung E des Absatzelementes 43 beträgt in der gezeigten Ausführungsform zumindest 50 % des Abstandes D der genannten Längsmittelachsen 44, 46 voneinander. Dabei ist das Absatzelement 43 einteilig mit dem Gelenkteil 12 ausgebildet.

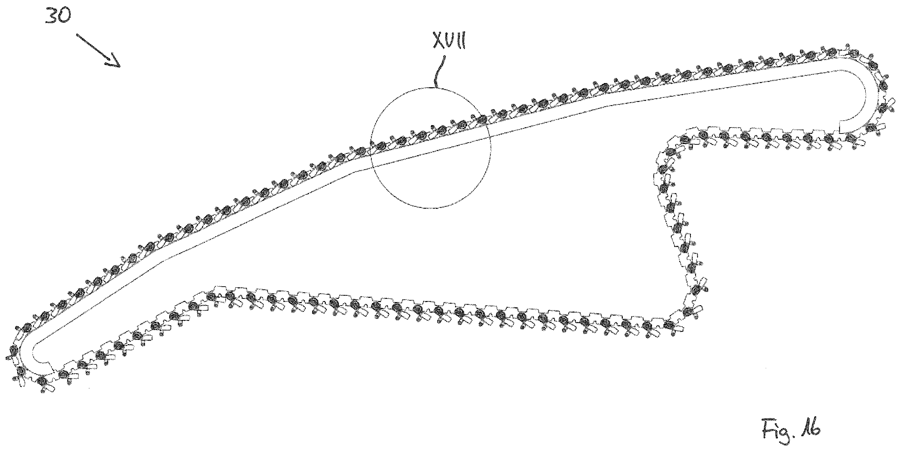

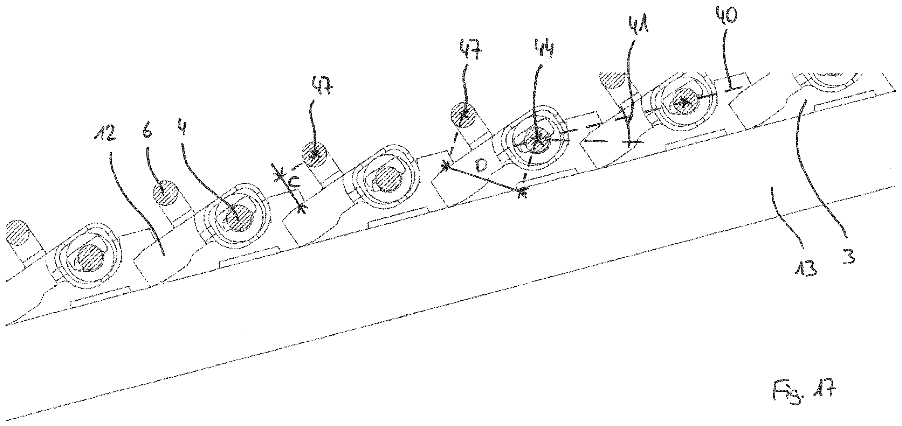

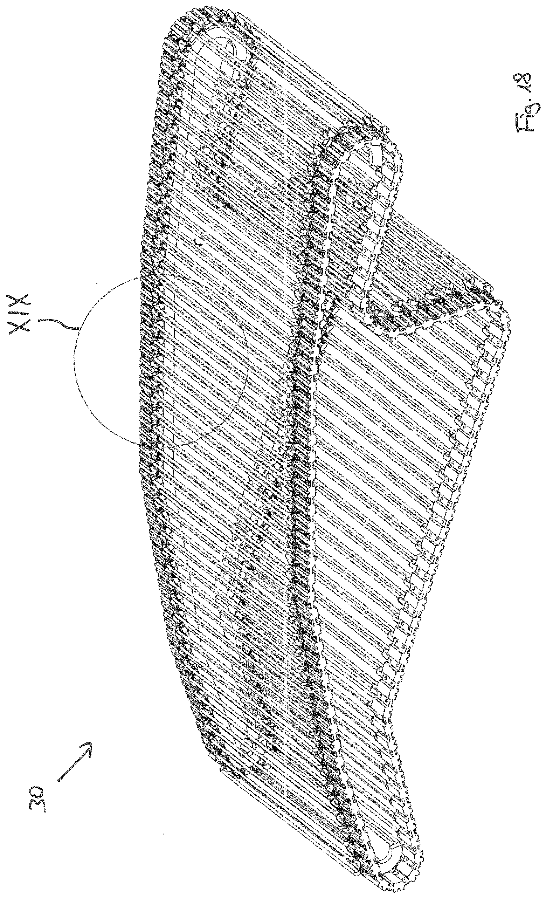

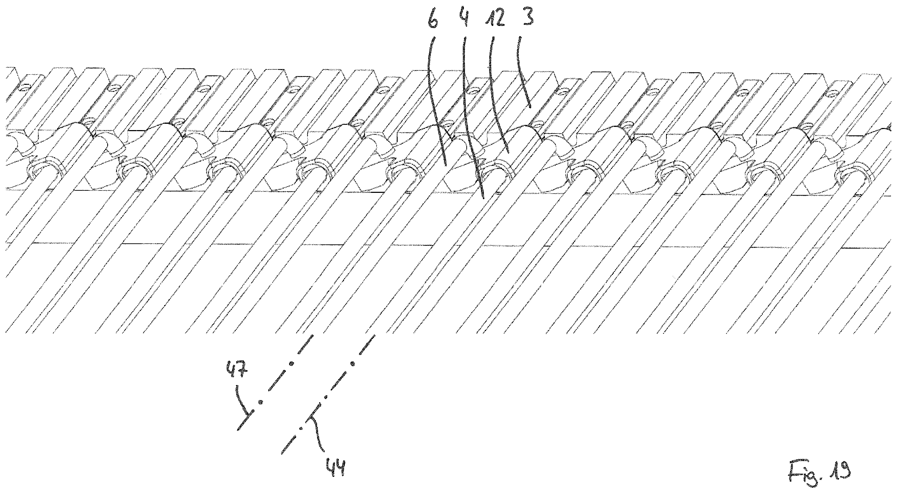

In einer alternativen, durch die Fig. 16 bis 19 dargestellten Ausführungsform der Erfindung hat der bewegliche Siebstab 6 der Klappeneinheit bzw. der Siebstabeinheit 11 einen vom Gelenkteil abgekröpften Verlauf. Dazu hat der Siebstab im mittleren Bereich einen geraden, parallel zum festen Siebstab 6 verlaufenden Mittelabschnitt und seitlich daran anschließende, zumindest anteilig senkrecht dazu verlaufende und an das Gelenkteil 12 anschließende Bereiche. Eine Mittelabschnittslängsmittelachse 47, um die sich der mittlere, gerade Bereich erstreckt, hat vom Gelenkteil 12 in der Seitenansicht gemäß Fig. 16/17 einen Abstand C, der zumindest 25% des Abstandes D entspricht. Der Abstand D beschreibt die Distanz der Mittelabschnittslängsmittelachse 47 von der Längsmittelachse 44 der Aufnahme 48 bzw. des Siebstabes 4.

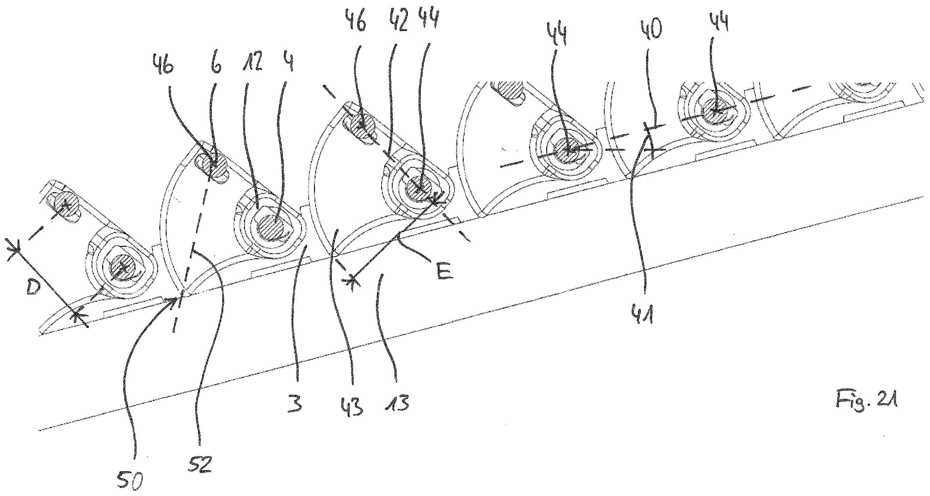

Eine in Fig. 21 dargestellte Stützachse 52, die die Längsmittelachse 46 des beweglichen Siebstabes 6 und einen Mittelstellungskontaktbereich 50 schneidet und orthogonal zur Längsmittelachse 46 angeordnet ist, schließt in der Mittelstellung mit der Förderrichtung bzw. der Förderfläche bzw. lageunabhängig mit der Ebene 42 einen Winkel von zumindest 70° ein. Der Mittelstellungskontaktbereich 50 ist der Teil der Außenoberfläche des Gelenkteils 12, welcher in der Mittelstellung auf dem Positioniermittel 13 aufliegt.

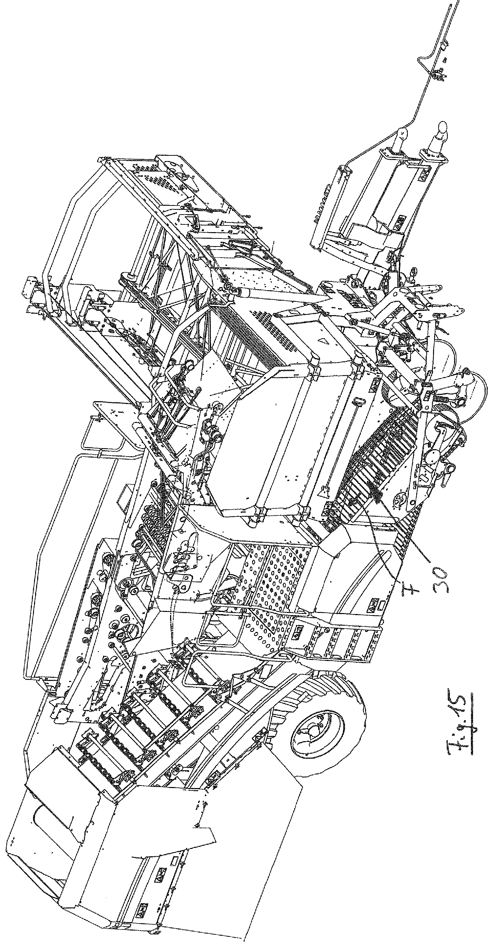

Eine erfindungsgemäße Erntemaschine (Fig. 15), hier zum Ernten von Kartoffeln, weist eine durch eine vorbeschriebene Siebbandeinheit 30 mitausgebildete Förderstrecke mit einer zunächst im Wesentlichen entgegen der Fahrtrichtung verlaufenden Förderrichtung F auf. Die Erntemaschine hat einen der Siebbandeinheit 30 zugeordnet, nicht dargestellten Neigungssensor, der mit dem Stellorgan 14 (vergl. u.a. Fig. 2) gekoppelt ist. Die Erntemaschine ist derart ausgebildet, dass mit wachsener, gemessener Neigung der Erntemaschine eine automatische Verstellung des Positioniermittels 13 einleitbar ist.

## Patentansprüche

1. Siebbandeinheit für eine Erntemaschine oder Ernteguttransportvorrichtung, insbesondere für einen Hackfruchternter oder ein Hackfruchttransportband und zum Absieben von Beimengen eines Gemisches aus Erntegut und Beimengen, umfassend ein Siebband (2) mit wenigstens zwei vorzugsweise als Trägerriemen oder - ketten ausgebildeten Endlosträgern (3), zwischen denen in Richtung quer zur Förderrichtung F Siebstäbe angeordnet sind, die eine Mehrzahl von insbesondere jeweils zumindest zwei Siebstäbe (4, 6) umfassende Siebstabeinheiten (11) ausbilden, wobei zumindest ein Teil der Siebstäbe relativ zu den Endlosträgern (3) beweglich festgelegt ist, **dadurch gekennzeichnet, dass** die Siebbandeinheit (1) ein wenigstens abschnittsweise längs des Siebbandes (2) angeordnetes und auf die beweglichen Siebstäbe (6) einwirkendes Positioniermittel (13) aufweist, über das in der Siebzone S in Siebrichtung betrachtet ein Abstand A in Förderrichtung F nachfolgender Siebstäbe definiert und insbesondere variabel einstellbar ist, wobei jede Siebstabeinheit (11) wenigstens eine Klappeneinheit mit zumindest einem der zwei Siebstäbe (4,6) aufweist, die Klappeneinheit über wenigstens ein mit dem Endlosträger (3) verbundenes Gelenk schwenk- oder drehbar ist, und das Positioniermittel (13) zur Beeinflussung einer Winkellage der Klappeneinheit dergestalt ausgebildet ist, dass der Siebstab um einen Winkel von zumindest 30° relativ zur Förderfläche aufwärts verschwenkbar ist.

2. Siebbandeinheit nach Anspruch 1, **dadurch gekennzeichnet, dass** das Gelenk mit einem biegsamen Gelenkteil versehen ist.

3. Siebbandeinheit nach Anspruch 1 oder 2, **dadurch gekennzeichnet, dass** das Positioniermittel (13) zur Begrenzung einer insbesondere schwerkraftbedingten Verschwenkung oder Drehung der Klappeneinheiten ausgebildet ist.

4. Siebbandeinheit nach einem der vorherigen Ansprüche , **dadurch gekennzeichnet, dass** das Positioniermittel (13) in der Siebzone S wenigstens eine Führungsfläche (16) zur Anlage der Klappeneinheiten aufweist.

5. Siebbandeinheit nach Anspruch 4, **dadurch gekennzeichnet, dass** die Führungsfläche (16) senkrecht zur Förderrichtung F betrachtet neben und insbesondere zwischen den Endlosträgern (3) angeordnet ist.

6. Siebbandeinheit nach Anspruch 4 oder 5, **dadurch gekennzeichnet, dass** die Führungsfläche (16) zur Erzeugung eines punktuell variierbaren Abstands A mit einer Profilierung versehen ist.

7. Siebbandeinheit nach einem der Ansprüche 4 bis 6, **dadurch gekennzeichnet, dass** zumindest ein Abschnitt der Führungsfläche (16) derart ausgebildet ist, dass ihr Abstand zu einer durch die Längsmittelachsen (44) von relativ zu den Endlosträgern (3) unbewegliche Siebstäben (4) aufgespannten Förderfläche (40) in Förderrichtung F insbesondere kontinuierlich und/oder in Abhängigkeit von einem Steigungswinkel B des Förderfläche (40) zu- oder abnimmt.

8. Siebbandeinheit nach einem der vorherigen Ansprüche , **dadurch gekennzeichnet, dass** zumindest ein Stellorgan (14) dem Positioniermittel (13) zugeordnet ist, über das der Abstand zumindest eines die Klappeneinheit führenden Teils des Positioniermittels (13) zum Endlosträger (3) einstellbar ist.

9. Siebbandeinheit nach einem der vorhergehenden Ansprüche, **dadurch gekennzeichnet, dass** zumindest einer der beweglichen Siebstäbe (6) in einer Mittelstellung, in der die Längsmittelachse (46) des einen beweglichen Siebstabes (6) in einer Ebene (42) mit den Längsmittelachsen (44) in Förderrichtung F vor- bzw. nachgeordneter und relativ zu den Endlosträgern (3) unbeweglicher Siebstäbe (4) angeordnet ist, unterschiedliche große Abstände zu den vor- bzw. nachgeordneten unbeweglichen Siebstäben (4) hat.

10. Siebbandeinheit nach einem der vorherigen Ansprüche und Einschluss von Anspruch 4, **dadurch gekennzeichnet, dass** ein Siebstab (4) einer jeweiligen Siebstabeinheit (11) an den Endlosträgern (3) festgelegt ist und einen Teil von zwei Gelenken zur Anbindung der Klappeneinheit ausbildet.

11. Siebbandeinheit nach einem der vorherigen Ansprüche, **dadurch gekennzeichnet, dass** das Positioniermittel (13) mitlaufend ausgebildet ist.

12. Siebbandeinheit nach einem der vorherigen Ansprüche, **dadurch gekennzeichnet, dass** das Positioniermittel eine Rolle umfasst.

13. Siebbandeinheit nach Anspruch 12, **dadurch gekennzeichnet, dass** die Rolle im Obertrum zum Hochdrücken zumindest der relativ zu den Endlosträgern (3) beweglich festgelegten Siebstäbe ausgebildet ist.

14. Siebbandeinheit nach Anspruch 13, **dadurch gekennzeichnet, dass** die relativ zu den Endlosträgern (3) beweglich festgelegten Siebstäbe im Obertrum auf den Endlosträgern aufliegen.

15. Siebbandeinheit nach einem der vorherigen Ansprüche, **gekennzeichnet durch** eine Mehrzahl von Positioniermitteln.

16. Siebbandeinheit nach einem der vorherigen Ansprüche mit einer Klappeneinheit umfassend den Siebstab (6) und wenigstens ein zur lösbaren Festlegung an dem weiteren Siebstab (4) der Siebbandeinheit (11) ausgebildeten Gelenkteil (12), wobei das Gelenkteil (12) oder der Siebstab (6) der Klappeneinheit eine zur Anlage an einem Positioniermittel (13) ausgebildete Außenoberfläche aufweisen, wobei die Klappeneinheit ein Absatzelement (43) aufweist, das die zur Anlage an dem Positioniermittel (13) ausgebildete Außenoberfläche aufweist und eine Erstreckung E quer zu einer Ebene (42) hat, in der eine Längsmittelachse (46, 47) des einen Siebstabes (6) und eine Längsmittelachse (44) einer Aufnahme (48) zur Festlegung am weiteren Siebstab (4) angeordnet ist, wobei die Erstreckung E mindestens 25 % des, bevorzugt 50 % des, besonders bevorzugt 100 % des Abstandes D der Längsmittelachsen (44,46) voneinander entspricht.

17. Siebbandeinheit nach Anspruch 16 , **dadurch gekennzeichnet, dass** der eine Siebstab (6) einen vom Gelenkteil (12) abgekröpften Verlauf hat, wobei eine Mittelabschnittslängsmittelachse (47) eines geradlinig verlaufenden Abschnittes des einen Siebstabes (6) vom Gelenkteil (12) in einer Seitenansicht einen Abstand C hat, der insbesondere zumindest 10 %, bevorzugt zumindest 25 %, besonders bevorzugt zumindest 50 % des Abstandes D der Mittelabschnittslängsmittelachse (47) von der Längsmittelachse (44) einer Aufnahme (48) zur Festlegung am weiteren Siebstab (4) beträgt.

18. Siebbandeinheit nach einem der Ansprüche 16 oder 17 umfassend ein Siebband mit wenigstens zwei vorzugsweise als Trägerriemen oder -ketten ausgebildeten Endlosträgern (3), zwischen denen in Richtung quer zur Förderrichtung F Siebstäbe (4,6) angeordnet sind, sowie umfassend eine Mehrzahl von Klappeneinheiten.

19. Siebbandeinheit nach Anspruch 18, **dadurch gekennzeichnet, dass** das Gelenkteil (12) derart ausgebildet ist, dass der Siebstab (6) aus einer Mittelstellung, in der die Längsmittelachse (46) des Siebstabes (6) in einer Ebene (42) mit den Längsmittelachsen (44) in Förderrichtung F vor- bzw. nachgeordneter und relativ zu den Endlosträgern (3) unbeweglicher Siebstäbe (4) angeordnet ist, zumindest anteilig orthogonal zur Förderfläche (40) um einen Winkel (W) von zumindest 60° aufwärts verschwenkbar ist.

20. Siebbandeinheit nach Anspruch 18 oder 19, **dadurch gekennzeichnet, dass** das Gelenkteil (12) derart ausgebildet ist, dass eine die Längsmittelachse (46) des Siebstabes (6) und einen Mittelstellungskontaktbereich (50) der Außenoberfläche des Gelenkteils (12), mit dem das Gelenkteil (12) in der Mittelstellung, in der die Längsmittelachse (46) des Siebstabes (6) in einer Ebene (42) mit den Längsmittelachsen (44) in Förderrichtung F vor- bzw. nachgeordneter und relativ zu den Endlosträgern (3) unbeweglicher Siebstäbe (4) angeordnet ist, auf dem Positioniermittel (13) aufliegt, schneidende und orthogonal zur Längsmittelachse (46) angeordnete Stützachse (52) in der Mittelstellung relativ zur Förderrichtung F, insbesondere um einen Winkel von zumindest 45°, bevorzugt um zumindest 70°, besonders bevorzugt um zumindest 80°, verschwenkt angeordnet ist.

21. Erntemaschine oder Ernteguttransportvorrichtung, **gekennzeichnet durch** eine Siebbandeinheit nach einem der vorherigen Ansprüche 1 bis 20.

22. Erntemaschine nach Anspruch 21, **gekennzeichnet durch** einen der Siebbandeinheit zugeordneten oder von der Siebbandeinheit umfassten Neigungssensor, der insbesondere dergestalt mit einem Stellorgan (14) gekoppelt ist, dass mit wachsender Neigung der Erntemaschine eine automatische Verstellung des Positioniermittels (13) einleitbar ist.

## Claims

1. Screening belt unit for a harvesting machine or harvested material transportation device, in particular for a root crop harvester or a root crop transportation belt, and for screening extraneous material out of a mixture of harvested material and extraneous material, comprising a screening belt (2) having at least two endless carriers (3), preferably in the form of carrier belts or chains, between which screening bars are arranged in a direction transversely to the conveying direction F, said screening bars forming a plurality of screening bar units (11) that comprise in particular in each case at least two screening bars (4, 6), wherein at least a part of the screening bars is fixed so as to be movable relative to the endless carriers (3), **characterized in that** the screening belt unit (1) has a positioning means (13), which is arranged at least locally along the screening belt (2) and acts on the movable screening bars (6) and via which positioning means (13), in the screening zone S, as seen in the screening direction, a spacing A in the conveying direction F of successive screening bars is defined and in particular settable in a variable manner, wherein each screening bar unit (11) has at least one flap unit having at least one of the two screening bars (4, 6), the flap unit is pivotable or rotatable via at least one joint connected to the endless carrier (3), and the positioning means (13) is configured to influence an angular position of the flap unit in such a manner that the screening bar is pivotable up by an angle of at least 30° relative to the conveying surface.

2. Screening belt unit according to Claim 1, **characterized in that** the joint is provided with a flexible joint part.

3. Screening belt unit according to Claim 1 or 2, **characterized in that** the positioning means (13) is configured to limit in particular gravity related pivoting or rotation of the flap units.

4. Screening belt unit according to one of the preceding claims, **characterized in that** the positioning means (13) has, in the screening zone S, at least one guide surface (16) for the flap units to rest on.

5. Screening belt unit according to Claim 4, **characterized in that** the guide surface (16), as seen perpendicularly to the conveying direction F, is arranged next to and in particular between the endless carriers (3).

6. Screening belt unit according to Claim 4 or 5, **characterized in that** the guide surface (16), in order to create a selectively variable spacing A, is provided with a profiling.

7. Screening belt unit according to one of Claims 4 to 6, **characterized in that** at least one portion of the guide surface (16) is configured in such a manner that its spacing from a conveying surface (40), which is spanned by the longitudinal centre axes (44) of screening bars (4) that are immovable relative to the endless carriers (3), increases or decreases, in particular continuously in the conveying direction F and/or depending on a pitch angle B of the conveying surface (40).

8. Screening belt unit according to one of the preceding claims, **characterized in that** at least one adjusting member (14) is assigned to the positioning means (13), via which the spacing of at least one part, guiding the flap unit, of the positioning means (13) with respect to the endless carrier (3) is settable.

9. Screening belt unit according to one of the preceding claims, **characterized in that** at least one of the movable screening bars (6) is at different large spacings from the upstream or downstream immovable screening bars (4) in a central position in which the longitudinal centre axis (46) of the one movable screening bar (6) is arranged in one plane (42) with the longitudinal centre axes (44) of screening bars (4) which are arranged upstream and downstream in the conveying direction F and are immovable relative to the endless carriers (3).

10. Screening belt unit according to one of the preceding claims with the inclusion of Claim 4, **characterized in that** one screening bar (4) of each screening bar unit (11) is fixed to the endless carriers (3) and forms a part of two joints for the attachment of the flap unit.

11. Screening belt unit according to one of the preceding claims, **characterized in that** the positioning means (13) is configured in a concurrently running manner.

12. Screening belt unit according to one of the preceding claims, **characterized in that** the positioning means comprises a roller.

13. Screening belt unit according to Claim 12, **characterized in that** the roller in the upper strand is configured to push up at least the screening bars that are fixed so as to be movable relative to the endless carriers (3).

14. Screening belt unit according to Claim 13, **characterized in that** the screening bars that are configured so as to be movable relative to the endless carriers (3) rest in the upper strand on the endless carriers.

15. Screening belt unit according to one of the preceding claims, **characterized by** a plurality of positioning means.

16. Screening belt unit according to one of the preceding claims with a flap unit comprising the screening bar (6) and at least one joint part (12) configured to be fixed releasably to the further screening bar (4) of a screening bar unit (11), wherein the joint part (12) or the screening bar (6) of the flap unit has an outer surface configured to rest on a positioning means (13), wherein the flap unit has a shoulder element (43) which has the outer surface configured for resting on the positioning means (13) and has an extent E transversely to a plane (42) in which a longitudinal centre axis (46, 47) of the one screening bar (6) and a longitudinal centre axis (44) of a receptacle (48) for fixing on the further screening bar (4) are arranged, wherein the extent E corresponds to at least 25%, preferably 50%, particularly preferably 100%, of the spacing D of the longitudinal centre axes (44, 46) from each other.

17. Screen belt unit according to Claim 16, **characterized in that** the one screening bar (6) has a profile bent from the joint part (12), wherein, in a side view, a centre portion longitudinal centre axis (47) of a rectilinearly running portion of the one screening bar (6) is at a spacing C from the joint part (12) that is in particular at least 10%, preferably at least 25%, particularly preferably at least 50%, of the spacing D of the centre portion longitudinal centre axis (47) from the longitudinal centre axis (44) of a receptacle (48) for fixing to the further screening bar (4).

18. Screening belt unit according to one of Claims 16 or 17, comprising a screening belt having at least two endless carriers (3), preferably in the form of carrier belts or chains, between which endless carriers (3) screening bars (4, 6) are arranged in a direction transversely to the conveying direction F, and comprising a plurality of flap units.

19. Screening belt unit according to Claim 18, **characterized in that** the joint part (12) is configured in such a manner that the screening bar (6) is pivotable up at least in portions orthogonally to the conveying surface (40) by an angle (W) of at least 60°, from a centre position in which the longitudinal centre axis (46) of the screening bar (6) is arranged in one plane (42) with the longitudinal centre axes (44) of the screening bars (4) which are arranged upstream or downstream in the conveying direction F and are immovable relative to the endless carriers (3).

20. Screening belt unit according to Claim 18 or 19, **characterized in that** the joint part (12) is configured in such a manner that a supporting axis (52) which intersects the longitudinal centre axis (46) of the screening bar (6) and a central position contact region (50) of the outer surface of the joint part (12), with which the joint part (12) rests on the positioning means (13) in the central position, in which the longitudinal centre axis (46) of the screening bar (6) is arranged in one plane (42) with the longitudinal centre axes (44) of screening bars (4) which are arranged upstream or downstream in the conveying direction F and are immovable relative to the endless carriers (3), and which supporting axis (52) is arranged orthogonally to the longitudinal centre axis (46), is arranged in a manner pivoted relative to the conveying direction F, in particular by an angle of at least 45°, preferably by at least 70°, particularly preferably by at least 80°, in the central position.

21. Harvesting machine or harvested material transportation device, **characterized by** a screening belt unit according to one of Claims 1 to 20.

22. Harvesting machine according to Claim 21, **characterized by** an inclination sensor which is assigned to the screening belt unit or is surrounded by the screening belt unit and in particular is coupled to an adjusting member (14) in such a manner that, as the inclination of the harvesting machine increases, an automatic adjustment of the positioning means (13) can be initiated.

## Revendications

1. Unité à bande de tamisage pour une machine de récolte ou un dispositif de transport de produits de récolte, en particulier pour une récolteuse de plantes-racines ou une bande de transport de plantes-racines, et permettant le tamisage de matières étrangères d'un mélange de produits à récolter et de matières étrangères, comprenant une bande de tamisage (2) avec au moins deux supports sans fin (3) réalisés de préférence sous forme de courroies ou de chaînes de support, entre lesquels sont agencées des barres de tamisage dans la direction transversale à la direction de transport F, qui forment une pluralité d'unités (11) à barres de tamisage comprenant en particulier chacune au moins deux barres de tamisage (4, 6), au moins une partie des barres de tamisage étant fixée de manière mobile par rapport aux supports sans fin (3), **caractérisée en ce que** l'unité (1) à bande de tamisage comporte un moyen de positionnement (13) agencé au moins par sections le long de la bande de tamisage (2) et agissant sur les barres de tamisage mobiles (6), par lequel, dans la zone de tamisage S, vue dans la direction de tamisage, une distance A dans la direction de transport F de barres de tamisage consécutives est définie et peut être réglée en particulier de manière variable, chaque unité (11) à barres de tamisage comportant au moins une unité à volet avec au moins l'une des deux barres de tamisage (4, 6), l'unité à volet pouvant être pivotée ou tournée par au moins une articulation reliée au support sans fin (3), et le moyen de positionnement (13) étant conçu pour influencer une position angulaire de l'unité à volet de telle manière que la barre de tamisage peut être pivotée vers le haut d'un angle d'au moins 30° par rapport à la surface de transport.

2. Unité à bande de tamisage selon la revendication 1, **caractérisée en ce que** l'articulation est pourvue d'une partie articulée flexible.

3. Unité à bande de tamisage selon la revendication 1 ou 2, **caractérisée en ce que** le moyen de positionnement (13) est conçu pour limiter un pivotement ou une rotation des unités à volet, notamment sous l'effet de la gravité.

4. Unité à bande de tamisage selon l'une des revendications précédentes, **caractérisée en ce que** le moyen de positionnement (13) comporte, dans la zone de tamisage S, au moins une surface de guidage (16) pour l'appui des unités à volet.

5. Unité à bande de tamisage selon la revendication 4, **caractérisée en ce que** la surface de guidage (16), vue perpendiculairement à la direction de transport F, est agencée à côté de, et en particulier entre, les supports sans fin (3).

6. Unité à bande de tamisage selon la revendication 4 ou 5, **caractérisée en ce que** la surface de guidage (16) est pourvue d'un profilage pour générer une distance A variable en certains points.

7. Unité à bande de tamisage selon l'une des revendications 4 à 6, **caractérisée en ce qu'**au moins une section de la surface de guidage (16) est conçue de telle manière que sa distance par rapport à une surface de transport (40) formée par les axes médians longitudinaux (44) de barres de tamisage immobiles (4) par rapport aux supports sans fin (3) augmente ou diminue dans la direction de transport F en particulier en continu et/ou en fonction d'un angle d'inclinaison B de la surface de transport (40).

8. Unité à bande de tamisage selon l'une des revendications précédentes, **caractérisée en ce qu'**est associé au moyen de positionnement (13) au moins un organe de réglage (14), par lequel la distance d'au moins une partie du moyen de positionnement (13) guidant l'unité à volet par rapport au support sans fin (3) peut être réglée.

9. Unité à bande de tamisage selon l'une des revendications précédentes, **caractérisée en ce qu'**au moins une des barres de tamisage mobiles (6) présente des distances de grandeurs différentes par rapport aux barres de tamisage immobiles (4) agencées en amont ou en aval dans une position centrale, dans laquelle l'axe médian longitudinal (46) de la barre de tamisage mobile (6) est agencé dans un plan (42) avec les axes médians longitudinaux (44) dans la direction de transport F de barres de tamisage(4) agencées en amont ou en aval et immobiles par rapport aux supports sans fin (3).

10. Unité à bande de tamisage selon l'une des revendications précédentes, la revendication 4 y compris, **caractérisée en ce qu'**une barre de tamisage (4) d'une unité (11) à bande de tamisage respective est fixée sur les supports sans fin (3) et forme une partie de deux articulations pour la liaison de l'unité à volet.

11. Unité à bande de tamisage selon l'une des revendications précédentes, **caractérisée en ce que** le moyen de positionnement (13) est conçu de façon à suivre le mouvement.

12. Unité à bande de tamisage selon l'une des revendications précédentes, **caractérisée en ce que** le moyen de positionnement comprend un galet.

13. Unité à bande de tamisage selon la revendication 12, **caractérisée en ce que** le galet est conçu dans la membrure supérieure pour pousser vers le haut au moins les barres de tamisage fixées de manière mobile par rapport aux supports sans fin (3).

14. Unité à bande de tamisage selon la revendication 13, **caractérisée en ce que** les barres de tamisage fixées de manière mobile par rapport aux supports sans fin (3) reposent dans la membrure supérieure sur les supports sans fin.

15. Unité à bande de tamisage selon l'une des revendications précédentes, **caractérisée par** une multitude de moyens de positionnement.

16. Unité à bande de tamisage selon l'une des revendications précédentes avec une unité à volet comprenant la barre de tamisage (6) et au moins une partie articulée (12) conçue pour être fixée de manière amovible sur l'autre barre de tamisage (4) de l'unité à bande de tamisage (11), la partie articulée (12) ou la barre de tamisage (6) de l'unité à volet comportant une surface extérieure conçue pour venir en appui sur un moyen de positionnement (13), l'unité à volet comportant un élément de talon (43) qui comporte la surface extérieure conçue pour venir en appui sur le moyen de positionnement (13) et présente une extension E transversalement à un plan (42), dans lequel un axe médian longitudinal (46, 47) de la barre de tamisage (6) et un axe médian longitudinal (44) d'un logement (48) sont agencés pour être fixés sur l'autre barre de tamisage (4), l'extension E correspondant au moins à 25 %, de manière préférée à 50 %, de manière particulièrement préférée à 100 % de la distance D entre les axes médians longitudinaux (44, 46).

17. Unité à bande de tamisage selon la revendication 16, **caractérisée en ce que** la barre de tamisage (6) possède un tracé coudé par rapport à la partie articulée (12), un axe médian longitudinal de section centrale (47) d'une section s'étendant en ligne droite de la barre de tamisage (6) présentant par rapport à la partie articulée (12) dans une vue latérale une distance C, qui est égale en particulier à au moins 10 %, de manière préférée à au moins 25 %, de manière particulièrement préférée à au moins 50 % de la distance D de l'axe médian longitudinal de section centrale (47) par rapport à l'axe médian longitudinal (44) d'un logement (48) pour la fixation sur l'autre barre de tamisage (4).

18. Unité à bande de tamisage selon l'une des revendications 16 ou 17, comprenant une bande de tamisage avec au moins deux supports sans fin (3) conçus de préférence en tant que courroies ou chaînes de support, entre lesquels sont agencées des barres de tamisage (4, 6) dans la direction transversale à la direction de transport F, comprenant également une multitude d'unités à volet.

19. Unité à bande de tamisage selon la revendication 18, **caractérisée en ce que** la partie articulée (12) est conçue de telle manière que la barre de tamisage (6) peut être pivotée vers le haut d'un angle (W) d'au moins 60° au moins proportionnellement de manière orthogonale à la surface de transport (40) depuis une position centrale, dans laquelle l'axe médian longitudinal (46) de la barre de tamisage (6) est agencé dans un plan (42) avec les axes médians longitudinaux (44) dans la direction de transport F de barres de tamisage (4) agencées en amont et en aval et immobiles par rapport aux supports sans fin (3).

20. Unité à bande de tamisage selon la revendication 18 ou 19, **caractérisée en ce que** la partie articulée (12) est conçue de telle manière qu'est agencé dans la position centrale par rapport à la direction de transport F, en particulier avec un pivotement d'un angle d'au moins 45°, de manière préférée d'au moins 70°, de manière particulièrement préférée d'au moins 80° un axe d'appui (52) agencé orthogonalement à l'axe médian longitudinal (46) et coupant l'axe médian longitudinal (46) de la barre de tamisage (6) et une zone de contact (50) de position centrale de la surface extérieure de la partie articulée (12) avec laquelle la partie articulée (12) repose sur le moyen de positionnement (13) dans la position centrale, dans laquelle l'axe médian longitudinal (46) de la barre de tamisage (6) est agencé dans un plan (42) avec les axes médians longitudinaux (44) dans la direction de transport F de barres de tamisage (4) agencées en amont ou en aval et immobiles par rapport aux supports sans fin (3).

21. Machine de récolte ou dispositif de transport de produits de récolte, caractérisée ou **caractérisé par** une unité à bande de tamisage selon l'une des revendications précédentes 1 à 20.

22. Machine de récolte selon la revendication 21 **caractérisée par** un capteur d'inclinaison associé à l'unité à bande de tamisage ou compris par l'unité à bande de tamisage, qui est couplé en particulier de telle manière à un organe de réglage (14) qu'un ajustement automatique du moyen de positionnement (13) peut être initié au fur et à mesure que l'inclinaison de la machine de récolte augmente.
